# EUROPEAN PATENT SPECIFICATION

(11) **EP 1 674 893 B1**
(45) Date of publication and mention of the grant of the patent: **29.08.2012**
(21) Application number: 04788078.6
(22) Date of filing: 24.09.2004
(51) Int. Cl.: G02B 5/02, G02B 5/04, G02F 1/13357, B29D 11/00

(54) **BACKLIGHT, METHOD FOR MANUFACTURING A DIFFUSER, AND LIQUID CRYSTAL DISPLAY DEVICE**
HINTERGRUNDBELEUCHTUNG, VERFAHREN ZUR HERSTELLUNG EINES DIFFUSERS UND FLÜSSIGKRISTALLANZEIGEEINRICHTUNG
RÉTROÉCLAIRAGE, PROCÉDÉ DE FABRICATION D'UN DIFFUSEUR, ET AFFICHEUR À CRISTAUX LIQUIDES

(30) Priority: 29.09.2003 JP 2003338308; 29.09.2003 JP 2003338174
(43) Date of publication of application: 28.06.2006
(73) Proprietor: Sony Corporation, Tokyo (JP)
(72) Inventor: OKU, Takashi, Minato-ku, Tokyo (JP); HATANAKA, Masato, Minato-ku, Tokyo (JP); KAWASHIMA, Yoshinari, Minato-ku, Tokyo (JP); KOSHIMURA, Akira, Kuki-shi, Saitama 3460035 (JP); SHIRATORI, Kazuhiro, Kuki-shi, Saitama 3460035 (JP)
(74) Representative: Müller - Hoffmann & Partner
(86) International application number: PCT/JP2004/013919
(87) International publication number: WO 2005/031446

(56) References cited:
- WO-A-00/08494
- JP-A- 5 173 134
- JP-A- 6 018 707
- JP-A- 6 222 207
- JP-A- 7 270 603
- JP-A- 7 270 708
- JP-A- 8 068 910
- JP-A- 8 146 229
- JP-A- 8 313 708
- JP-A- 9 101 405
- JP-A- 9 269 418
- JP-A- 2000 030 515
- JP-A- 2002 103 379
- JP-A- 2002 303 734
- JP-A- 2002 352 611
- JP-A- 2003 053 802
- JP-A- 2003 240 921

## Description

### TECHNICAL FIELD

The present invention relates to a backlight a method of manufacturing a diffuser, and to a liquid crystal display apparatus. Particularly, it is directed to a backlight, a method of manufacturing a diffuser , and to a liquid crystal display apparatus, all enabling a cost reduction by reducing the parts count and curtailing unnecessary manufacturing processing.

### BACKGROUND ART

A liquid crystal display apparatus includes: a liquid crystal display device (called also an LCD panel) wherein two transparent glass substrates are stacked in alignment one upon another such that surfaces thereof, each having transparent electrodes, an alignment film, and the like laminated thereon, face to each other, and wherein liquid crystal is sealed between both substrates; a backlight, disposed below the liquid crystal display device, for supplying light to the liquid crystal display device; a printed board having circuitry for driving the liquid crystal display device; and a metallic frame serving to accommodate these members therein and having a liquid crystal display window.

Note that backlights come in a type wherein a light source such as a cold cathode fluorescent light (CCFL) or a light emission diode (LED) is arranged along and in proximity to a side surface of a light guide plate formed from a transparent synthetic resin plate for guiding light, and a type wherein light sources such as a plurality of cold cathode fluorescent lights are arrayed in parallel with each other immediately below a liquid crystal display device. A diffuser for diffusing light for uniform emission onto the liquid crystal display device is interposed, in the former, between the light guide plate and the liquid crystal display device, and in the latter, between the plurality of cold cathode fluorescent lights and the liquid crystal display device.

In a liquid crystal display apparatus of the type wherein a light source is arranged along and in proximity to a side surface of a light guide plate, light emitted from the light source is guided by the light guide plate (which may otherwise be called a light guide), diffused by the diffuser, and subjected to light distribution control by a lens film, for emission onto the liquid crystal display device.

Conventionally, a transparent lens film (which may otherwise be called a lens sheet or a prism plate), an upper surface of which is a prismatic surface and a lower surface of which is a smooth surface, is interposed between the liquid crystal display device and the diffuser arranged therebelow, in order to increase display luminance in the display apparatus to obtain a liquid crystal display screen which is light and exhibits a uniform luminance distribution.

Moreover, as a type of a lens film, a BEF (Brightness Enhancement Film) (Trademark) has been extensively used. Since the light diffused by the diffuser is focused toward a liquid crystal display device surface by the BEF, a liquid crystal display screen which is light and exhibits a uniform luminance distribution can be obtained. The prismatic surface of the lens film may include, e.g., a saw-tooth and semi-cylindrical cross sectional shapes.

However, by using the lens film in order to increase display luminance, moire may occur on the display screen due to interference between the liquid crystal display device and the lens film. In addition, when seen obliquely, the display screen may exhibit mirror-like glare.

In order to obtain a display screen which is light and exhibits a uniform luminance distribution by increasing the luminance of the backlight and also to prevent occurrence of moire and glare on the display screen, a technique (e.g., Patent Document 1) has been disclosed, in which, e.g., a second diffuser, an upper surface of which has a light diffusing effect and a lower surface of which is coated with a chemical mat-finished layer, is further arranged between the lens film and the liquid crystal display device.

[Patent Document 1] Japanese Patent Publication No. 3205393

Referring to Fig. 1, the technique disclosed in Patent Document 1 will be described.

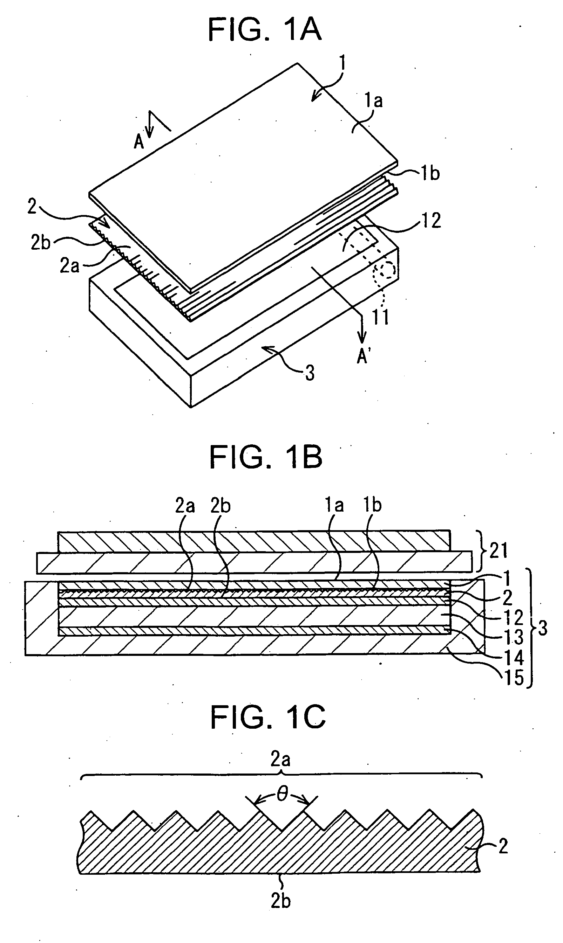

Fig. 1A is an exploded perspective view of a backlight of a liquid crystal display apparatus. Fig. 1B is a sectional view of the liquid crystal display apparatus provided with the backlight of Fig. 1A, taken along a cutting line A-A'. Fig. 1C is a partial cross sectional view of a lens film shown in Figs. 1A and 1B.

A liquid crystal display device 21 is configured to receive light emitted from a backlight 3 provided on a lower side thereof. The backlight 3 arranged below the liquid crystal display device 21 includes a second diffuser 1, a lens film 2, a first diffuser 12, a light guide plate 13, a reflector 14, and a cold cathode fluorescent light 11, which is a light source, and a frame body 15 for holding them. The frame body 15 is formed by molding.

The light guide plate 13 is configured to guide light emitted by the cold cathode fluorescent light 11 to cause the light to exit toward an extensive area of the first diffuser 12 which is provided on an upper surface thereof (on the first diffuser 12 side) as uniformly as possible (e.g., it is configured such that white dots are printed on a bottom surface thereof, to allow part of the guided light to be reflected by the white dots, whereby the light exits toward the first diffuser 12). The diffuser 12 diffuses the light emergent from the light guide plate 13. The reflector 14 totally reflects light having transmitted from the lower surface of the light guide plate 13, to cause it to re-enter the light guide plate 13.

The lens film 2 is formed from, e.g., a 0.36 mm-thick polycarbonate film. A lower surface thereof (the first diffuser 12 side) is a smooth surface 2b, and an upper surface thereof (the second diffuser 1 side) is provided with a prismatic surface 2a having a cross-sectional shape such as shown in, e.g., Fig. 1C, wherein so many V-shaped stripe grooves running in parallel with each other is formed in array. Each V-shared stripe groove is set to such an angle θ as to satisfy a required light distribution performance, e.g., to some 90 degrees (e.g., 80 to 100 degrees). The lens film 2 focuses the light diffused at a large angle by the first diffuser 12, in a direction perpendicular to the display screen through the prismatic surface 2a.

The second diffuser 1 interposed between the lens film 2 and the liquid crystal display device 21 is formed from, e.g., a 0.25 mm-thick polycarbonate film. A lower surface thereof (the lens film 2 side) is formed into a smooth surface 1b, and an upper surface thereof (the liquid crystal display device 21) is formed into a rough surface 1b by a known frosting process.

As shown in Fig. 1, by arranging the lens film 2 having the prismatic upper surface 2a and the smooth lower surface 2b, between the first diffuser 12 and the liquid crystal display device 21, the light diffused at a large angle by the first diffuser 12 is focused in the direction perpendicular to the display screen through the prismatic surface 2a of the lens film 2, and thus the luminance of the entire backlight 3 can be increased. In addition, a range of diffusion can be made small as a whole, and thus a uniform luminance distribution can be maintained. Therefore, the light of the backlight 3 can be used efficiently, and a liquid crystal display screen which is light and exhibits a uniform luminance distribution can hence be obtained.

Moreover, by interposing the second diffuser 1 having the frosted rough upper surface 1a and the smooth lower surface 1b, between the lens film 2 and the liquid crystal display device 21, the light having transmitted through the lens film 2 is diffused by the frosted rough surface 1a of the second diffuser 1, as a result of which, moire occurring on the display screen due to interference between the liquid crystal display device 21 and the lens film 2, and mirror-like glare occurring when the display screen is seen obliquely can be prevented, and the display quality can hence be enhanced.

Note that the reflector 14, light guide plate 13, first diffuser 12, lens film 2, second diffuser 1 are held directly in contact with each other with no gap provided between any adjacent ones of the members, within a recess provided in the frame body 15.

Alternatively, the lens film 2 and the first diffuser 12 may be formed integrally. For example, they may be formed integrally such that a diffusion layer is molded on a lower surface side with diffusion particles mixed into a transparent resin material, and then a prismatic surface is molded on an upper surface side.

Moreover, the spread of electronic equipment incorporating a liquid crystal display apparatus calls for mass production of backlight units for their liquid crystal display apparatus. Particularly, when a liquid crystal display apparatus is to be incorporated into equipment which is smaller and thinner, light emitting diodes are often used as its light source.

As opposed to light guide plates which have been formed by processing an acrylic plate member into a desired shape, a recent trend is toward manufacturing them by injection molding which features a reduced number of manufacturing process steps and a stable, high-quality mass production. Injection molding is a technique by which a molten material such as, e.g., a molten acrylic resin, is charged to fill a cavity of an injection molding die, to manufacture a molded article having a geometry identical with a geometry of the cavity.

The injection molding die has a molten material charging hole called a gate for charging a molten resin that fills the cavity. The quality of the light guide plate thus manufactured by injection molding depends on the position of this gate, which is the molten material charging hole.

Therefore, various types of light guide plates are manufactured using injection molding dies having their gates at different positions. For example, techniques have been devised and implemented, in which, as shown in Fig. 2, a light guide plate 21 is fabricated by having a gate 34 on a side surface 32 paralleling a direction of guiding light incident on a light incidence surface 31 of the light guide plate 21, and as shown in Fig. 3, a light guide plate 41 is fabricated by having a gate 54 on a light incidence surface 51, and furthermore, as shown in Fig. 4, a light guide plate 61 is fabricated by having a gate 74 on an anti-light incidence surface 73 positioned opposite to a light incidence surface 71.

[Patent Document 2] .Japanese Patent Application Publication No. 2002-292690

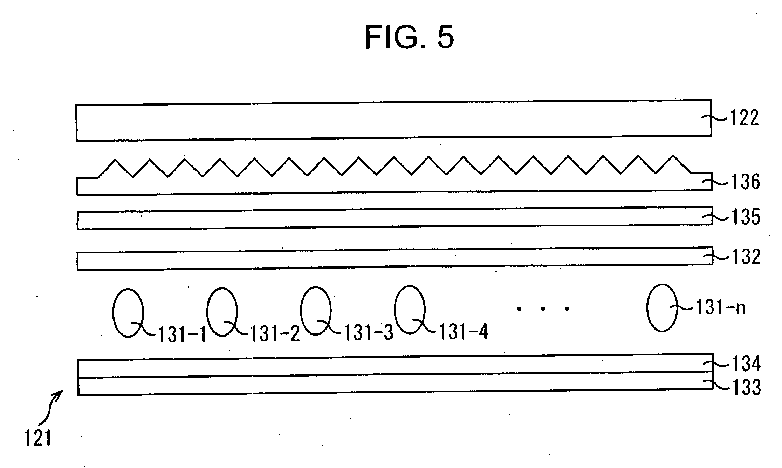

Referring next to Fig. 5, a configuration example of a conventional liquid crystal display apparatus will be described, in which a plurality of cold cathode fluorescent lights are arrayed in parallel with each other immediately below a liquid crystal display device, as light sources.

The liquid crystal display includes a backlight 121 and an LCD panel 122.

The LCD panel 122 receives light which is diffused and light distribution-controlled by the backlight 121.

The backlight 121 includes fluorescent tubes 131-1 to 131-n, a diffuser 132, a rear frame 133, a reflection sheet 134, a diffusion sheet 135, and a BEF 136.

Light emitted from the fluorescent tubes 131-1 to 131-n is diffused by the diffuser 132. Also, some of the light emitted from the fluorescent tubes 131-1 to 131-n, which is directed opposite to the diffuser 132, is reflected by the reflection sheet 134 stuck to a surface of the rear frame 133 which is on a side of the fluorescent tubes 131-1 to 13-1-n, to enter the diffuser 132 for diffusion. The light diffused by the diffuser 132 is further diffused by the diffusion sheet 135, to enter the BEF (Brightness Enhancement Firm) 136. The BEF 136 has a prismatic surface as an upper surface thereof (the LCD panel 122 side) and a smooth surface as a lower surface thereof (the diffusion sheet 135 side). The prismatic surface has so many V-shaped stripe grooves arrayed in parallel with each other to form a saw-tooth cross sectional shape. The thus formed BEF 136 focuses the diffused light emergent from the diffusion sheet 135 toward an upper surface (the LCD panel 122 side).

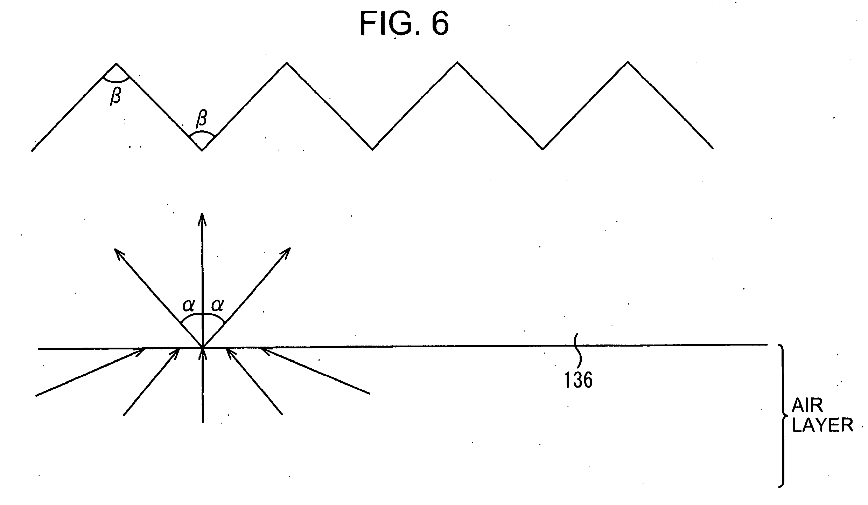

The light diffused by the diffusion sheet 135 enters the BEF 136 via an air layer. Referring to Fig. 6, the light entering the BEF 136 and light exiting from the BEF 136 will be described.

Assuming that the angles of emission of the light diffused by the diffusion sheet 135 onto the BEF 136 range from 0 to 90 degrees, the angle of incidence into the BEF 136 equals an angle α determined by the ratio of the refractive index of the BEF 136 to that of the air layer. If a resin for forming the BEF 136 is an acrylic having a refractive index of 1.49, the angle of emission of the light onto the BEF 136 is within ± 42 degrees. And the light having entered the BEF 136 exits from the prismatic surface of the BEF 136 toward the upper surface (the LCD panel 122 side). An angle β formed by both faces of the prismatic surface is determined by the refractive index of the resin for forming the BEF 136 and a required light focusing performance.

Where it is not required to distinguish the fluorescent tubes 131-1 to 131-n individually, they are collectively called simply the fluorescent tubes 131.

In JP 8-313708 A, a lens sheet for a liquid crystal display device as well as its productions are described. The lens sheet has a light diffusing effect used in a backlight system for a liquid crystal display device. An embodiment describes to use a layer of cyclic polyolefin-type resin as a molding layer being a prism shape molding layer. Moreover, a further layer of this resin contains 20 wt% of polymethylmethacrylate beads as light diffusion agent dispersed therein as a light diffusion layer. A different embodiment provides a substrate material for laminate co-extrusion.

### DISCLOSURE OF THE INVENTION

### PROBLEMS TO BE SOLVED BY THE INVENTION

The conventional backlights employ so many parts in order to satisfy the needs for the light guiding performance and light distribution performance as mentioned above that their assembly costs are elevated. Thus, a further cost reduction is called for by reducing the parts count of a backlight.

For example, according to the technique described with reference to Fig. 1, the reflector 14, light guide plate 13, first diffuser 12, lens film 2, second diffuser 1 are held within the recess provided in the frame body 15, and thus there are so many parts employed to elevate the assembly costs. Patent Document 1 discloses the technique in which the lens film 2 and the first diffuser 12 are formed integrally. However, unless the integral molding is realized by a simple manufacturing method, a cost reduction will not result. In addition, depending on the type of a resin used as a material, an adhesiveness problem may arise therefrom.

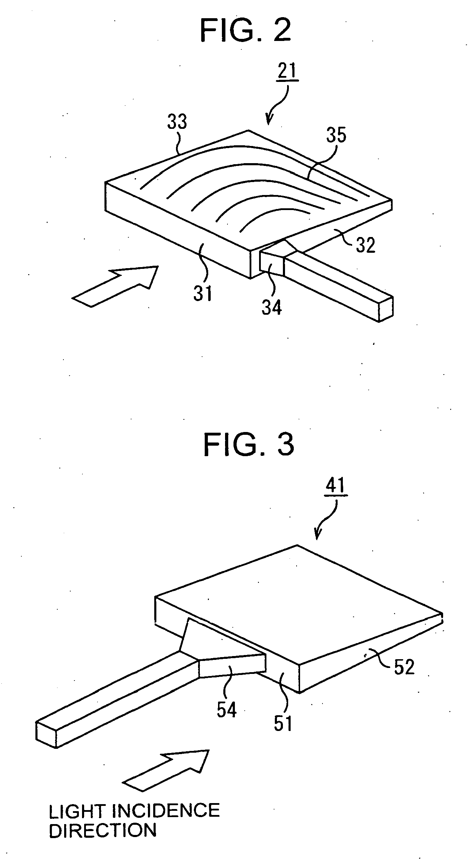

Furthermore, when the gate 34 is provided on the side surface 32 as shown in Fig. 2, and if a molten material is charged into the cavity of the injecting molding die via the gate 34, a high pressure is applied around the gate 34.

A light reflection surface of a light guide plate, i.e., a surface opposed to a light emergence surface 35 in Fig 2 is generally provided with a prismatic pattern, a dot pattern, or the like in order to raise the incident light toward the light emergence surface efficiently. These patterns are formed by transferring fine asperities formed in the cavity of the injection molding die onto a molten material that fills the cavity.

The higher the pressure applied to the molten material for filling, the better the transfer. Thus, in the light guide plate 21 shown in Fig. 2, a superior transfer performance is obtained around the side surface 32 provided with the gate 34. To put it in the opposite way, transfer performance around a side surface 33 opposite to the side surface 32 is inferior to that around the side surface 32.

Therefore, in the light guide plate 21, an unevenness of transfer occurs, in which transfer accuracy varies between left and right sides as viewed from the light incidence surface 31. Thus, a problem is addressed that light emergent from the light emergence surface 35 exhibits nonuniform luminance.

Furthermore, as shown in Fig. 3, when the gate 54 is provided on the light incidence surface 54, the light guide plate 41 formed is free from an unevenness of transfer such as mentioned above, but a gate mark does remain on the light incidence surface 51. Thus, even if the gate 54 is cut away, light propagation trouble occurs. To overcome this trouble, it is required to have the light incidence surface 51 polished after the gate 54 is cut away.

Therefore, the manufacturing process of the light guide plate 41 involves an increased number of steps as compared with ordinary such manufacturing processing, thus imposing a problem of time loss and cost increase due to the increased number of manufacturing steps.

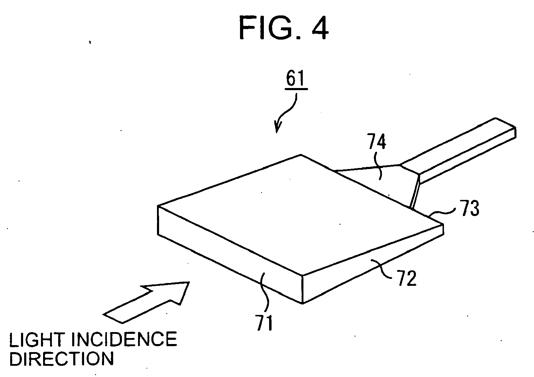

In addition, as shown in Fig. 4, when the gate 74 is provided on the anti-light incidence surface 73, and if the light guide plate 61 has a wedge-shaped geometry, which is a typical shape as a light guide plate, there arises a problem that a surface area of the gate 74 through which to charge a molten material becomes too narrow to charge the molten resin therethrough in the worst case. Particularly, in electronic equipment which tend to become smaller and thinner, the thickness of the light guide plate itself must also be very small. Therefore, in the case of the wedge-shaped light guide plate 61, the anti-light incidence surface 73 becomes the thinnest, thus imposing a problem that it is not realistic to provide the gate 74 on the anti-light incidence surface 73.

In the case described with reference to Fig. 5, of course, the parts count is similarly large, and in addition, gaps for forming the air layers must be set accurately between the parts, which has elevated the manufacturing costs.

Furthermore, as information processing apparatus are becoming smaller, thinner liquid crystal display apparatus are in demand. Thus, it is expected to provide further thinner light guides.

The present invention has been made in view of such circumstances, and an object thereof is to permit provision of a high-performance, low-cost backlight which is thinner than the conventional backlights.

The problem is solved by a backlight according to claim 1 and a method for manufacturing a diffuser of a backlight according to claim 5.

### MEANS FOR SOLVING THE PROBLEMS

A first backlight includes a light source for emitting light, and a diffuser disposed between the light source and a liquid crystal display device. The diffuser is formed integrally from a diffusion layer for diffusing the light from the light source, and a light distribution layer, disposed more toward the liquid crystal display device than the diffusion layer, for distributing the light diffused by the diffusion layer toward the liquid crystal display device. That is, the diffuser is formed by integrally molding the diffusion layer and the light distribution layer. Moreover, as the light source, e.g., a cold cathode fluorescent light, an LED, or the like may be used.

In the first backlight, light is emitted to enter the diffuser. In the diffuser, the light emitted from the light source is diffused by the diffusion layer, and distributed by the light distribution layer. The light distribution layer is formed integrally with the diffusion layer and disposed more toward the liquid crystal display device than the diffusion layer.

A method of manufacturing a first diffuser includes a first charging step of charging a first resin into a first cylinder, a second charging step of charging the first resin into which a second resin different from the first resin is mixed, into a second cylinder, a first molding step of molding a two-layered sheet including the first resin and the first resin into which the second resin is mixed, by multi-layer extrusion molding, using the first cylinder into which the first resin is charged by the first charging step and the second cylinder into which the first resin into which the second resin is mixed is charged by the second charging step, and a second molding step of molding a surface of the first resin of the sheet molded by the first molding step, into a prismatic shape by surface rolling.

In the method of manufacturing the first diffuser , the first resin is charged into the first cylinder, and the first resin into which the second resin is mixed is charged into the second cylinder. Then, using the first cylinder into which the first resin is charged and the second cylinder into which the first resin into which the second resin is mixed is charged, the first resin and the first resin into which the second resin is mixed are molded into a two-layered sheet. A surface of the first resin of the molded sheet is molded into a prismatic shape by surface rolling.

A method of manufacturing a second diffuser, according to the present invention, is characterized by including a first charging step of charging a first resin into a first cylinder, a second charging step of charging the first resin into which a second resin different from the first resin is mixed, into a second cylinder, a third charging step of charging the first resin into a third cylinder, a first molding step of molding a three-layered sheet by multi-layer extrusion molding, using the first cylinder into which the first resin is charged by the first charging step, the second cylinder into which the first resin into which the second resin is mixed is charged by the second charging step, and the third cylinder into which the first resin is charged by the third charging step, wherein the three-layered sheet is formed from the first resin, the first resin into which the second resin is mixed, and the first resin, with both exposed layers thereof being formed from the first resin, a second molding step of molding a surface of one of the first resin-formed layers of the sheet molded by the first molding step into a prismatic shape by surface rolling, and a third molding step of molding a surface of other one of the first resin-formed layers of the sheet molded by the first molding step into a prismatic shape by surface rolling.

In the method of manufacturing the second diffuser according to the present invention, the first resin is charged into the first cylinder, and the first resin into which the second resin is mixed is charged into the second cylinder, and further the first resin is charged into the third cylinder. Then, using the first cylinder into which the first resin is charged, the second cylinder into which the first resin into which the second resin is mixed is charged, and the third cylinder into which the first, resin is charged, a three-layered sheet is molded by multi-layer extrusion molding. The three-layered sheet is formed from the first resin, the first resin into which the second resin is mixed, and the first resin, with both exposed layers thereof being layers formed from the first resin. A surface of one of the first resin-formed layers of the molded sheet is molded into a prismatic shape by surface rolling, and a surface of the other first resin-formed layers is molded into a prismatic shape by surface rolling.

A method of manufacturing a third diffuser includes a mixing step of mixing a second resin into a first resin, a first molding step of molding the first resin into which the second resin is mixed by the mixing step, into a sheet, a second molding step of molding a prism-shaped first resin by using a 2P molding method so as to be in contact and thus integral with one of surfaces of the sheet molded by the first molding step.

In the method of manufacturing the third diffuser, the second resin is mixed into the first resin, and the first resin into which the second resin is mixed is molded into a sheet. Then, the first resin is molded into a prismatic shape using a 2P molding method such that the first resin is in contact and thus integral with one of surfaces of the sheet.

A first liquid crystal display apparatus includes a liquid crystal display device, and a backlight for illuminating the liquid crystal display device, wherein the backlight includes a light source for emitting light, and a diffuser disposed between the light source and the liquid crystal display device, wherein the diffuser includes a diffusion layer for diffusing the light emitted from the light source, and a light distribution layer, disposed more toward the liquid crystal display device than the diffusion layer, for distributing the light diffused by the diffusion layer toward the liquid crystal display device.

In the first liquid crystal display apparatus, there are provided the liquid crystal display device and the backlight for illuminating the liquid crystal display device. In the backlight, light is emitted to enter the diffuser. In the diffuser, the light emitted from the light source is diffused by the diffusion layer, and distributed by the light distribution layer. The light distribution layer is formed integrally with the diffusion layer and disposed more toward the liquid crystal display device than the diffusion layer.

A second backlight, according to the present invention, is characterized by including a light source for emitting light, and a diffuser disposed between the light source and a liquid crystal display device, wherein the diffuser includes a light focusing layer for focusing the light emitted from the light source, and a light distribution layer, disposed more toward the liquid crystal display device than the light focusing layer, for distributing the light focused by the light focusing layer toward the liquid crystal display device.

In the second backlight of the present invention, there are provided the liquid crystal display device and the backlight for illuminating the liquid crystal display device. In the backlight, light is emitted to enter the diffuser. In the diffuser, the light emitted from the light source is focused by the light focusing layer, and distributed by the light distribution layer. The light distribution layer is formed integrally with the light focusing layer, and disposed more toward the liquid crystal display device than the light focusing layer.

A second liquid crystal display apparatus, according to the present invention, is characterized by including a liquid crystal display device, and a backlight for illuminating the liquid crystal display device, wherein the backlight includes a light source for emitting light, and a diffuser disposed between the light source and the liquid crystal display device, wherein the diffuser includes a light focusing layer for focusing the light emitted from the light source and a light distribution layer, formed integrally with the light focusing layer and disposed more toward the liquid crystal display device than the light focusing layer, for distributing the light focused by the light focusing layer toward the liquid crystal display device.

In the second liquid crystal display apparatus, according to the present invention, there are provided the liquid crystal display device and the backlight for illuminating the liquid crystal display device. In the backlight, light is emitted to enter the diffuser. In the diffuser, the light emitted from the light source is focused by the light focusing layer, and distributed by the light distribution layer. The light distribution layer is formed integrally with the light focusing layer and disposed more toward the liquid crystal display device than the light focusing layer.

### ADVANTAGES OF THE INVENTION

According to a first aspect of the present invention, in a liquid crystal display apparatus, a liquid crystal display device can be illuminated, particularly, with a reduced parts count, and satisfying a required light distribution performance.

According to a further aspect of the present invention, a diffuser can be manufactured. Particularly, a diffuser in which the light focusing layer, the diffusion layer, and the light distribution layer are integrally formed can be manufactured with a simple method, using multi-layered extrusion molding and rolling.

According to a further aspect of the present invention, a diffuser can be manufactured. Particularly, a diffuser in which the diffusion layer and the light distribution layer are integrally formed can be manufactured with a simple method using a 2P molding method.

According to a further aspect of the present invention, a liquid crystal display apparatus can be provided. Particularly, a liquid crystal display apparatus can be provided, which has a backlight capable of illuminating a liquid crystal display device, with a reduced parts count, and satisfying a required light distribution performance.

According to a further aspect of the present invention, in a liquid crystal display apparatus, a liquid crystal display device can be illuminated, particularly, with a reduced parts count, and in a manner increasing utilization efficiency of emitted light.

According to a further aspect of the present invention, a liquid crystal display apparatus can be provided. Particularly, a liquid crystal display apparatus is provided, which has a backlight capable of illuminating a liquid crystal display device, with a reduced parts count, and in a manner increasing utilization efficiency of emitted light.

### BRIEF DESCRIPTION OF THE DRAWINGS

[Fig. 1A] It is a diagram for explaining the configuration of a backlight using a conventional light guide.
[Fig. 1B] It is a diagram for explaining the configuration of the backlight using the conventional light guide.
[Fig. 1C] It is a diagram for explaining the configuration of the backlight using the conventional light guide.
[Fig. 2] It is a diagram for explaining a light guide plate manufactured by providing a gate on a side surface thereof, shown as a conventional art.
[Fig. 3] It is a diagram for explaining a light guide plate manufactured by providing a gate on a light incidence surface thereof, shown as a conventional art.
[Fig. 4] It is a diagram for explaining a light guide plate manufactured by providing a gate on an anti-light incidence surface thereof, shown as a conventional art.
[Fig. 5] It is a diagram for explaining the configuration of a conventional backlight using fluorescent tubes.
[Fig. 6] It is a diagram for explaining light entering a BEF via an air layer.

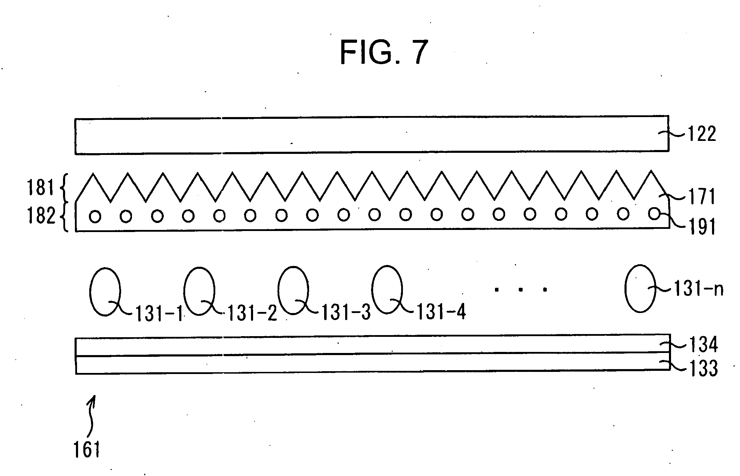

[Fig. 7] It is a diagram for explaining a first configuration example of a backlight according to a comparative example.

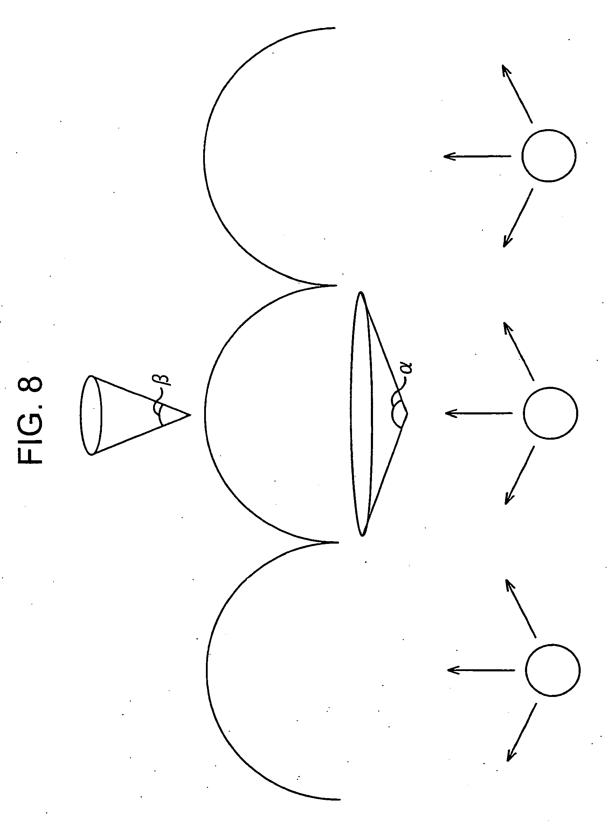

[Fig. 8] It is a diagram for explaining light distribution performance of a diffuser.

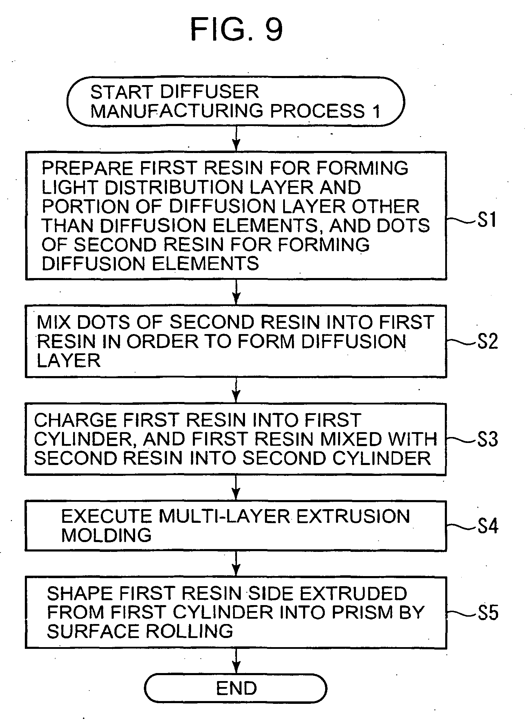

[Fig. 9] It is a flowchart for explaining a diffuser manufacturing process 1.

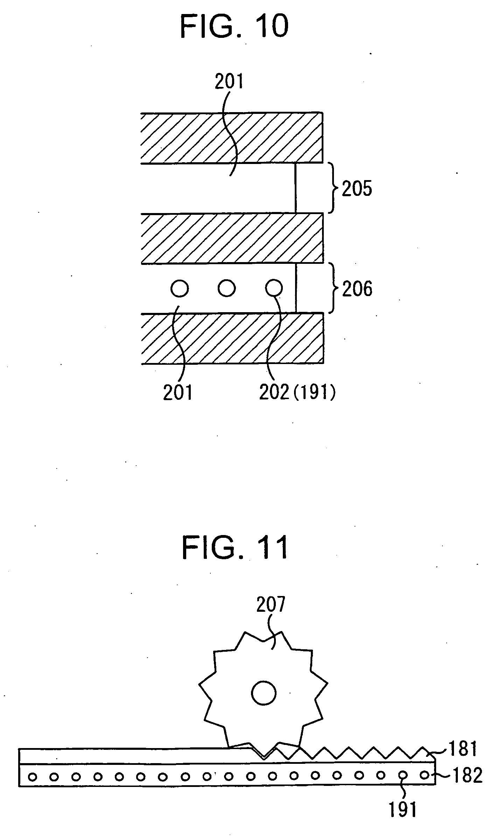

[Fig. 10] It is a diagram for explaining the diffuser manufacturing process 1.
[Fig. 11] It is a diagram for explaining the diffuser manufacturing process 1.

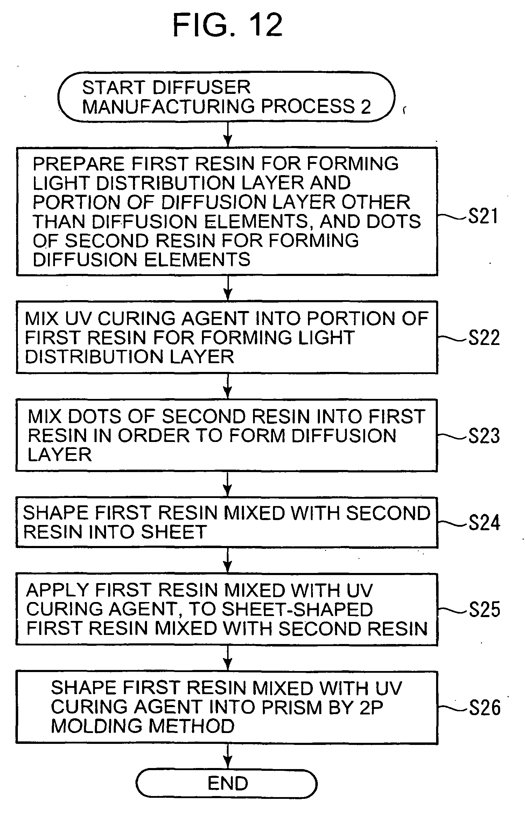

[Fig. 12] It is a flowchart for explaining a diffuser manufacturing process 2.

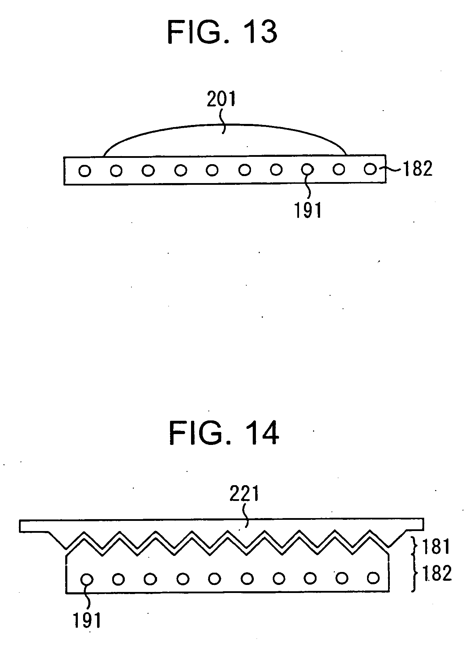

[Fig. 13] It is a diagram for explaining the diffuser manufacturing process 2.
[Fig. 14] It is a diagram for explaining the diffuser manufacturing process 2.

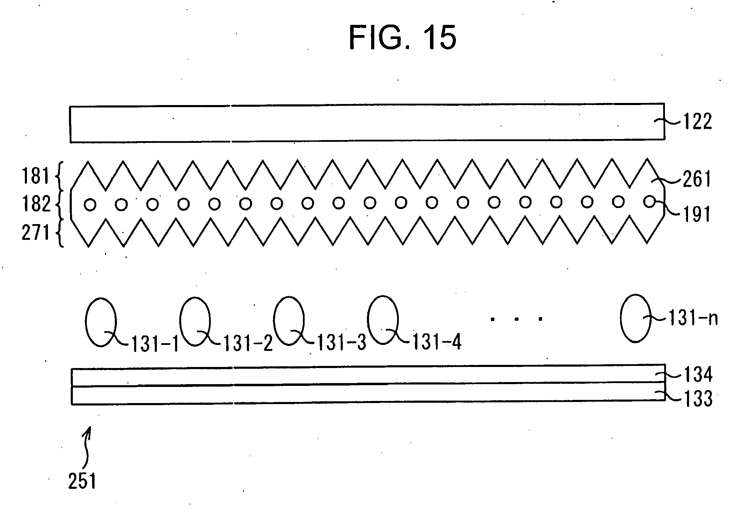

[Fig. 15] It is a diagram for explaining a second configuration example of a backlight, according to the present invention.

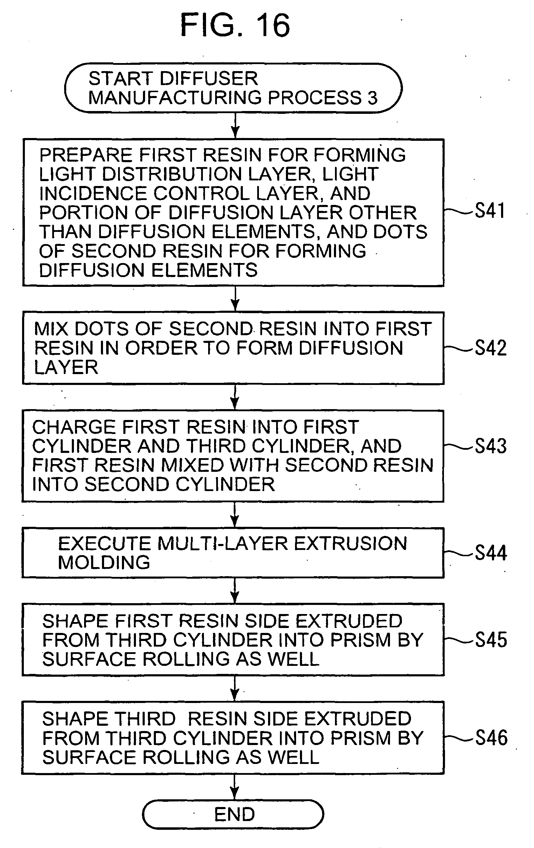

[Fig. 16] It is a flowchart for explaining a diffuser manufacturing process 3.

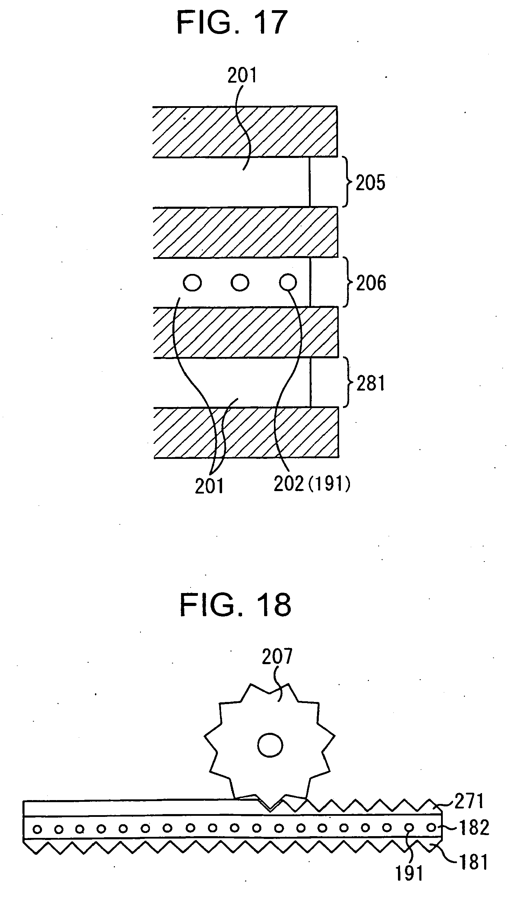

[Fig. 17] It is a diagram for explaining the diffuser manufacturing process 3.
[Fig. 18] It is a diagram for explaining the diffuser manufacturing process 3.

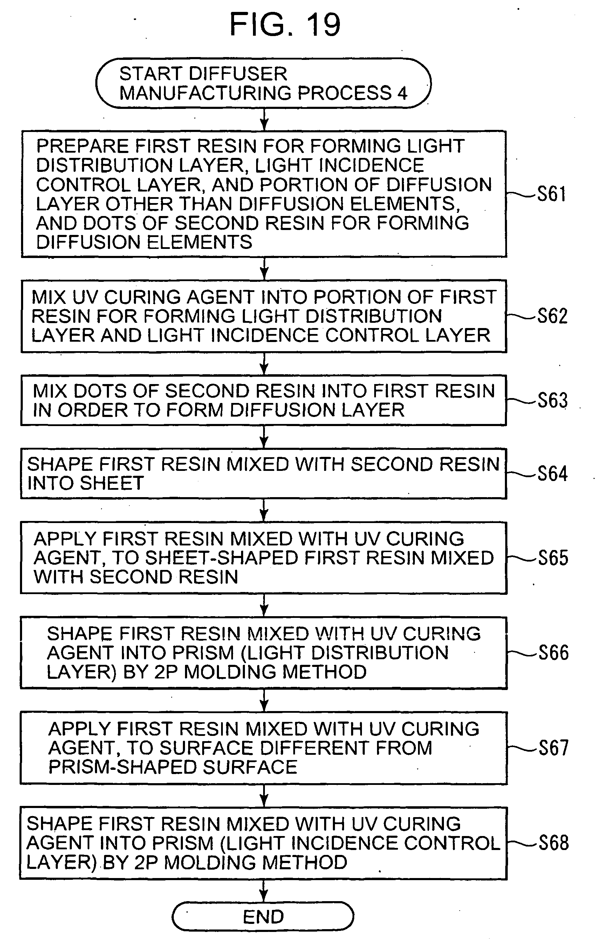

[Fig. 19] It is a flowchart for explaining a diffuser manufacturing process 4.

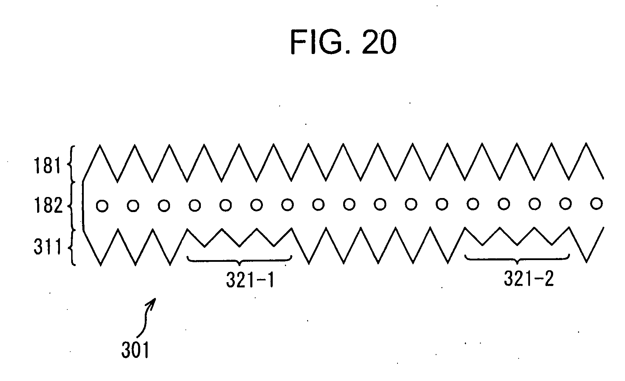

[Fig. 20] It is a diagram showing an example light distributor usable in place of a light distributor of Fig. 15.

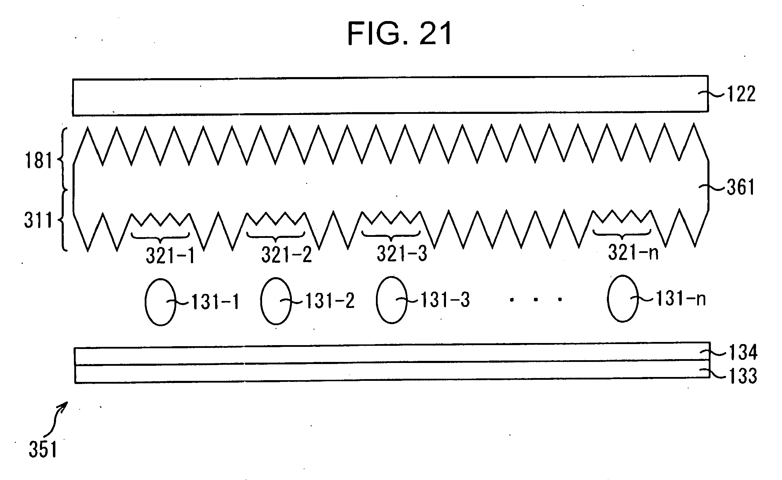

[Fig. 21] It is a diagram for explaining a third configuration example of a backlight

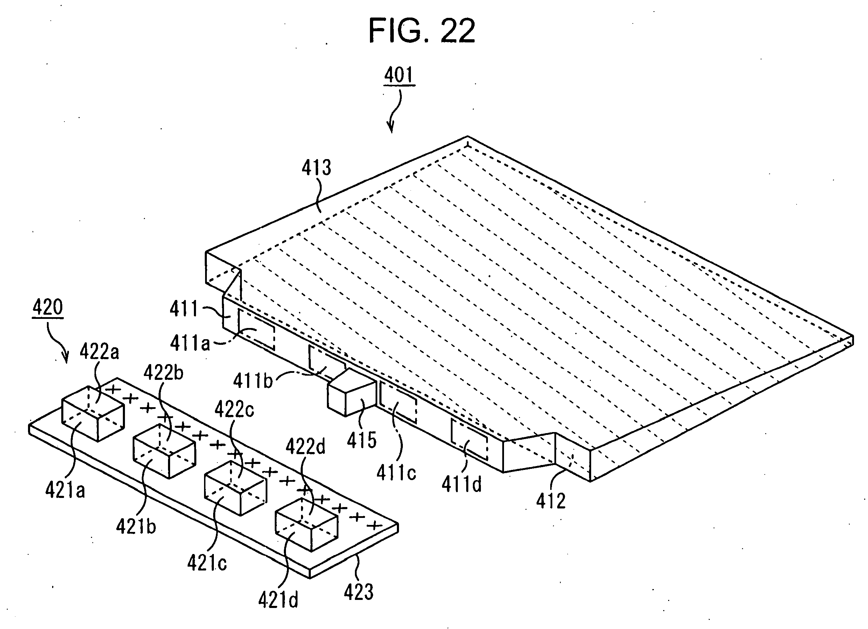

[Fig. 22] It is a diagram for explaining a light guide plate.

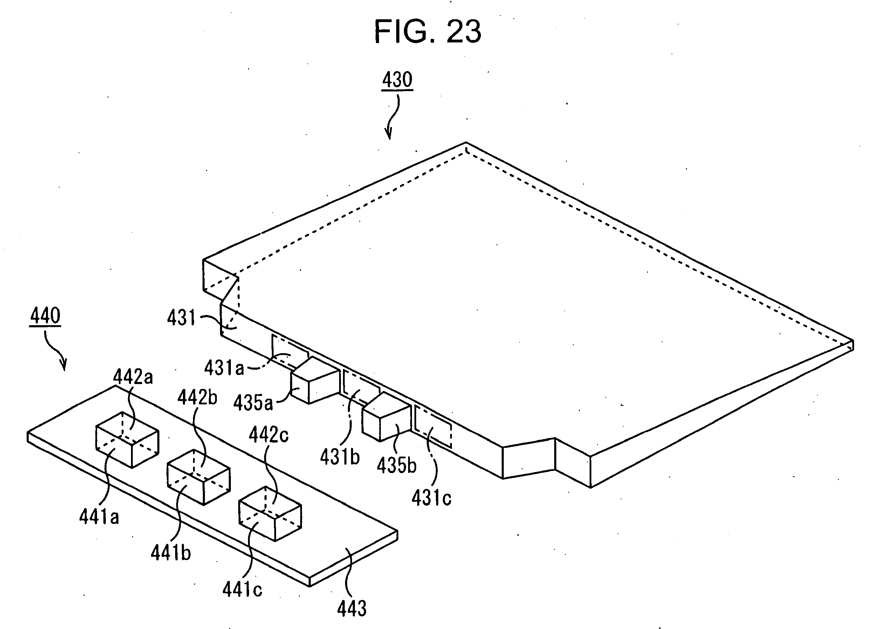

[Fig. 23] It is a diagram showing another example of the same light guide plate.

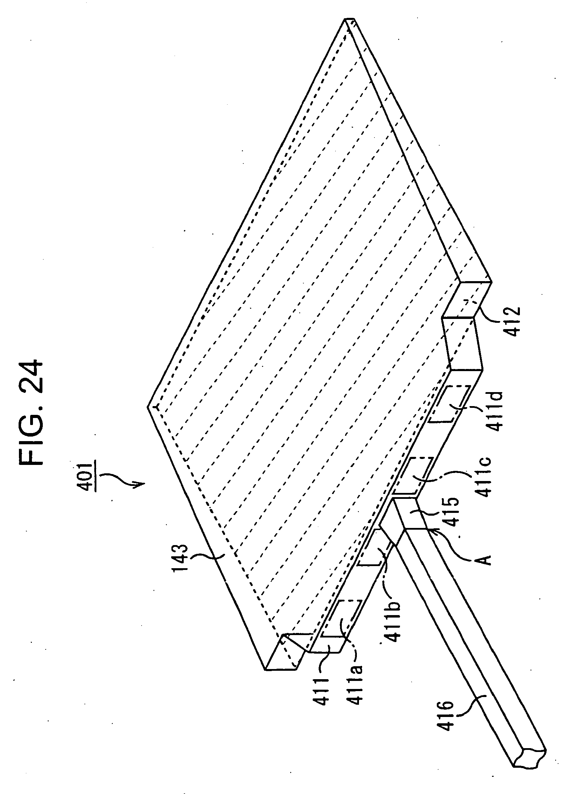

[Fig. 24] It is a diagram showing the appearance of the same light guide plate including a runner.

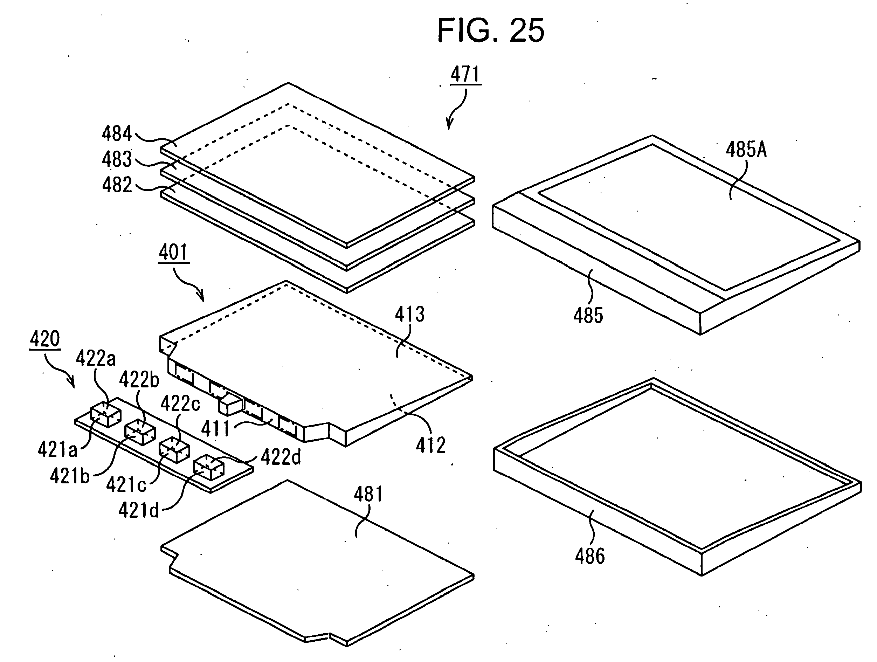

[Fig. 25] It is a diagram for explaining the configuration of a backlight unit incorporating the same light guide plate.

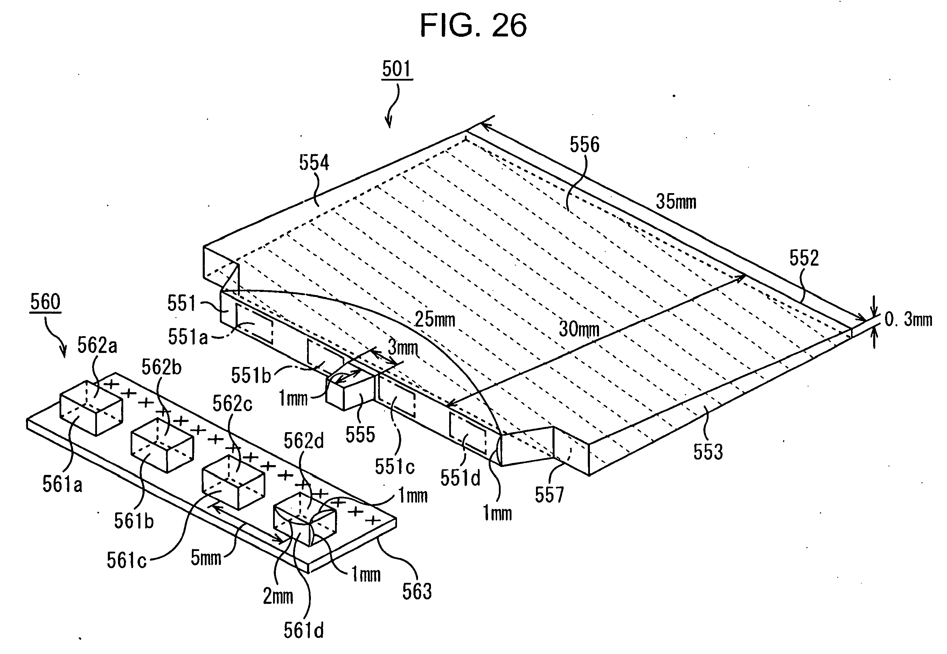

[Fig. 26] It is a diagram for explaining the same light guide plate specifically manufactured.

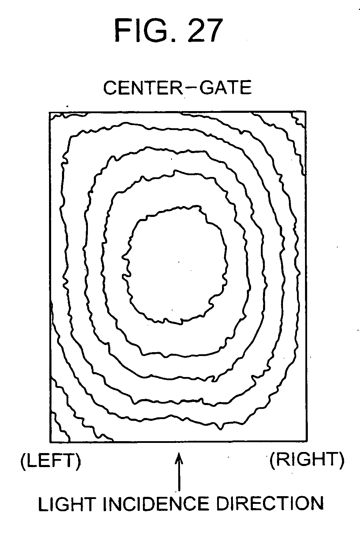

[Fig. 27] It is a diagram showing a luminance measurement result as to the same light guide plate specifically manufactured.

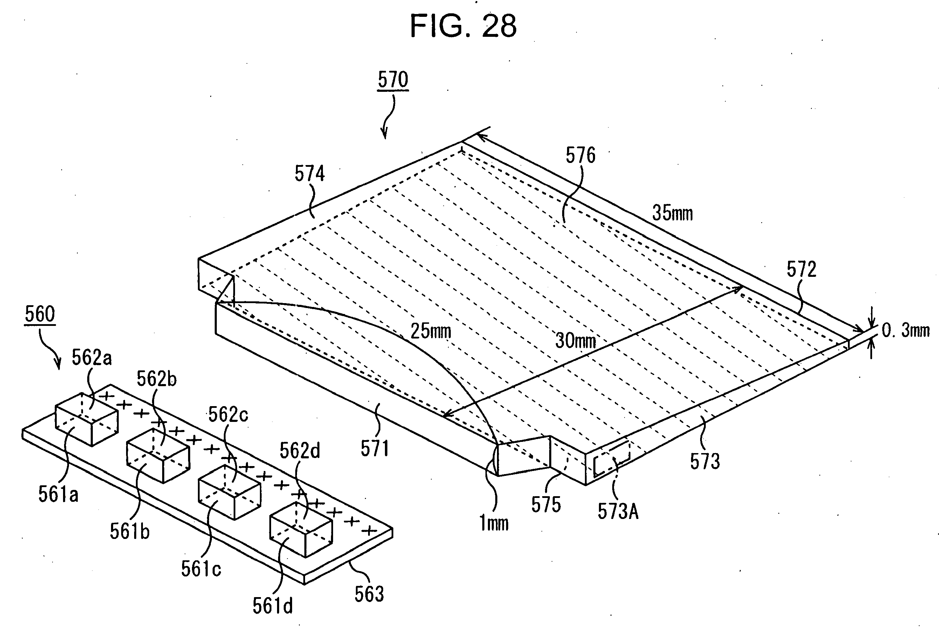

[Fig. 28] It is a diagram for explaining a light guide plate specifically manufactured by providing a gate on a side surface thereof.

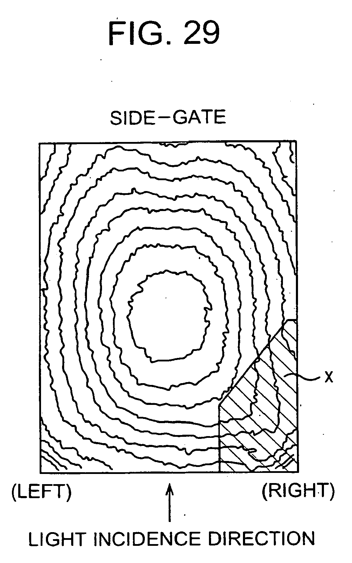

[Fig. 29] It is a diagram showing a luminance measurement result as to the light guide plate specifically manufactured by providing a gate on a side surface thereof.

### DESCRIPTION OF REFERENCE SYMBOLS

122 LCD panel, 131 fluorescent tube, 133 rear frame, 134 reflection sheet, 161 backlight, 171 diffuser, 181 light distribution layer, 182 diffusion layer, 191 diffusion element, 201 first resin, 202 second resin, 205 first cylinder, 206 second cylinder, 207 surface roll, 221 die, 251 backlight, 261 diffuser, 271 light incidence control layer, 281 third cylinder, 301 diffuser, 311 light incidence control layer, 321 light incidence control section, 351 backlight, 361 diffuser, 401 light guide plate, 411 light incidence surface, 411a, 411b, 411c, 411d positions, 415 gate formation, 420 light source section, 421, 421a, 421b, 421c, 421d light emitting diodes, 422a, 422b, 422c, 422d light emergence surface, 423 substrate, 471 backlight unit

### BEST MODE FOR CARRYING OUT THE INVENTION

A first comparative example will be described below with reference to the drawings.

Backlights come in a type wherein a light source such as a cold cathode fluorescent light (CCFL) or a light emission diode (LED) is arranged along and in proximity to a side surface of a light guide plate formed from a transparent synthetic resin plate for guiding light, and a type wherein light sources such as a plurality of cold cathode fluorescent lights are arrayed in parallel with each other. A diffuser for diffusing light for uniform emission onto the liquid crystal display device is interposed, in the former, between the light guide plate and the liquid crystal display device, and, in the latter, between the plurality of cold cathode fluorescent lights and the liquid crystal display device.

In the first comparative example, a description will be given of a case where light sources such as a plurality of cold cathode fluorescent lights are arrayed in parallel with each other immediately below the liquid crystal display device.

Fig. 7 is a sectional view for explaining a first configuration example of a liquid crystal display apparatus having a backlight according to a comparative example.

Note that the same reference symbols are given to parts corresponding to those in the conventional case, and descriptions thereof are omitted as appropriate.

That is, a backlight 161 has a configuration similar to that of the backlight 121 described with reference to Fig. 5, except that the backlight 161 includes a diffuser 171, instead of the diffuser 132, diffusion sheet 135, and BEF 136.

The diffuser 171 is provided with a diffusion layer 182 including diffusion elements 191, on a side which light emitted from fluorescent tubes 131 enters. A lower surface (the fluorescent tube 131 side) of the diffusion layer 182 is smoothly shaped. The other side of the diffusion layer 182 which is on a side of an LCD panel 122, i.e., a side from which much of the emitted light exits is provided with a light distribution layer 181 formed from a prismatic surface. The prismatic surface has an array of so many V-shaped stripe grooves having a saw-tooth cross sectional shape or an array of asperities each having a semi-cylindrical cross sectional structure (e.g., stripe grooves or asperities are formed in parallel with each other in array). Specifically, the prismatic shape of the light distribution layer 181 may be an array of triangular, sinusoidal, semi-circular, elliptic cross-sections. Moreover, the prismatic shape of the light distribution layer 181 may be an arrangement wherein a plurality of triangular, sinusoidal, semi-circular, elliptic, pyramidal, semi-spherical units are disposed in X and Y directions which are orthogonal to each other.

Part of the light having entered the diffusion layer 182 enters the surfaces of the diffusion elements 191, and is partially reflected due to a difference in refractive index between a resin for forming a portion of the diffusion layer 182 excluding the diffusion elements 191 and a resin for forming the diffusion elements 191. Part of the light enters the diffusion elements 191 at a predetermined refractive index, and exits from the diffusion elements 191 at the predetermined refractive index. That is, the light having entered the diffusion layer 182 is diffused by the diffusion elements 191.

And the light having been diffused in the diffusion layer 182 is controlled by the light distribution layer 181 such that the light is distributed toward the LCD panel 122.

Of the diffuser 171, the light distribution layer 181 and the portion of the diffusion layer 182 excluding the diffusion elements 191 are formed from the same resin. Only the diffusion elements 191 are formed from a different resin. Therefore, neither reflection nor refraction occurs between the light distribution layer 181 and the diffusion layer 182. Moreover, it is preferable that the ratio of a refractive index of the resin for forming the light distribution layer 181 and the portion of the diffusion layer 182 excluding the diffusion elements 191 to a refractive index of the resin for forming the diffusion elements 191 take a larger value, since light diffusing effects by the diffusion elements 191 are thereby enhanced.

It is preferable to use resins having refractive indices ranging from 1.2 to 1.7 for both a first resin for forming the light distribution layer 181 and the portion of the diffusion layer 182 excluding the diffusion elements 191, and a second resin for forming the diffusion elements 191.

Specifically, as the first resin for forming the light distribution layer 181 and the portion of the diffusion layer 182 excluding the diffusion elements 191 and the second resin for forming the diffusion elements 191, different ones of resins may be used, respectively, which include, e.g., PC (PolyCarbonates) having refractive indices ranging from 1.58 to 1.59, PMMA (PolyMethylMethAcrylates) having refractive indices ranging from 1.49 to 1.50, or MS (Methacrylic Styrene resins) having refractive indices ranging from 1.56 to 1.58.

In the conventional case described with reference to Figs. 5 and 6, due to the difference in the refractive index between the air layer and the BEF 136, the incidence angle of light before controlling light distribution is limited. By contrast, unlike the conventional case described with reference to Figs. 5 and 6, in the diffuser 171, no air layer is interposed between a light diffusion portion and a light focusing portion. That is, in the backlight 161, , diffused light is distributed through no air layer. As a result, as shown in Fig. 8, light reaching the light distribution layer 181 remains at an angle of diffusion as diffused by the diffusion elements 191.

Therefore, light distribution performance required of the light distribution layer 181 does differ from that of the conventional BEF 136 receiving diffused light through the air layer. The prismatic shape of the light distribution layer 181 is optimized by the diffusion efficiency by the diffusion layer 182, the refractive index of the resin for forming the light distribution layer 181, and the light distribution performance required as the backlight 161.

By having such a configuration, a backlight can be provided, which can realize the required light distribution performance without use of a diffusion sheet and the like, other than the diffusion layer 182.

While the case where the fluorescent tubes 131 are used as the light sources has been described here, it goes without saying that LEDs (light emitting diodes) or the like may alternatively be used.

Referring next to a flowchart of Fig. 9, and Figs. 10 and 11, a diffuser manufacturing process 1 will be described, which is an example of a process of manufacturing the diffuser 171.

In step S1, the first resin for forming the light distribution layer 181 and the portion of the diffusion layer 182 excluding the diffusion elements 191, and dots of the second resin for forming the diffusion elements 191 are prepared.

In step S2, the dots of the second resin are mixed into the first resin in order to form the diffusion layer.182. From the dots of the second resin mixed into the first resin, the diffusion elements 191 of the diffusion layer 182 are formed.

In step S3, the first resin is charged into a first cylinder, and the first resin mixed with the second resin is charged into a second cylinder, in order to execute multi-layer extrusion molding. That is, as shown in Fig. 10, a first resin 201 is charged into a first cylinder 205, and the first resin 201 into which a second resin 202 is mixed is charged into a second cylinder 206.

In step S4, multi-layer extrusion molding is executed by a multi-layer extrusion molding machine.

Multi-layer extrusion molding is, in principle, a method of fabricating elongated articles by feeding a resin material into a heating cylinder (barrel) using a screw or a plunger for heating and fluidization, to have the material pass through a front-end die (a die having a cavity whose geometry is identical with a cross section of the material passing therethrough) to shape the material, and then to cool and solidify the material using water or air. Molded articles having various cross sections, such as films, sheets, pines, profiles, can be fabricated using dies of different geometries.

It is supposed here that the die has a geometry for molding sheets. And, as shown in Fig. 10, since the first resin 201 is charged into the first cylinder 205, and the second resin 202-mixed first resin 201 is charged into the second cylinder 206, a two-layered sheet is molded, which has the diffusion layer 182 and a layer (of the first resin 201 with no prismatic surface formed) for producing the light distribution layer 181.

In step S5, as shown in Fig 11, of the sheet produced by the multi-layer extrusion molding machine, a side of the first resin (a side of a surface roll 207 in Fig. 11) extruded from the first cylinder is molded into a prismatic shape by surface rolling, whereby the light distribution layer 181 contiguous to the diffusion layer 182 is formed. The process of manufacturing the diffuser 171 having no air layer between the light distribution layer 181 and the diffusion layer 182 is thereby terminated.

Referring next to a flowchart of Fig. 12, and Figs. 13 and 14, a diffuser manufacturing process 2 will be described, which is an example different from the process of manufacturing the diffuser 171 described with reference to the flowchart of Fig. 9, and Figs. 10 and 11.

In step S21, a first resin for forming the light distribution layer 181 and the portion of the diffusion layer 182 excluding the diffusion elements 191, and dots of a second resin for forming the diffusion elements 191 are prepared.

In step S22, a UV curing agent is mixed into a portion of the first resin 201 for forming the light distribution layer 181. Note that this step is omitted if the first resin is a UV curing resin.

In step S23, the dots of the second resin 202 are mixed into the first resin 201 in order to form the diffusion layer 182. From the dots of the second resin 202 mixed into the first resin 201, the diffusion elements 191 of the diffusion layer 182 are formed.

In step S24, the second resin 202-mixed first resin 201 is shaped into a sheet, by, e.g., an extrusion molding method, a calendar molding method, or the like. From the resin sheet thus molded, the diffusion layer 182 is formed.

In step S25, the first resin 201, into which a UV curing agent is mixed or which is a UV curing resin, is applied to the sheet-shaped, second resin 202-mixed first resin 201.

In step S26, the first resin 201, into which a UV curing agent is mixed or which is a UV curing resin, is molded into a prismatic shape defined by a die 221 using a 2P molding method, whereby the light distribution layer 181 is formed. The process of manufacturing the diffuser 171 having no air layer between the light distribution layer 181 and the diffusion layer 182 is thereby terminated.

The 2P molding method is a system in which by using a low-viscosity UV curing resin, the geometry of a die is transferred onto the resin for duplication. Specifically, the UV curing resin is applied between an electroforming die (stamper) and a substrate glass, and the resin is UV-cured by radiation of ultraviolet rays for molding into a desired shape.

The diffuser 171 included in the backlight 161 of Fig. 7 is manufactured by any of the manufacturing processes described with reference to Figs. 9 to 14.

Fig. 15 is a sectional view for explaining a second configuration example of a liquid crystal display apparatus having a backlight_{,} according to the present invention.

Note that the same reference symbols are given to parts corresponding to those in the case of the first configuration example described with reference to Fig. 7, and descriptions thereof are omitted as appropriate.

That is, a backlight 251 in the second configuration example, according to the present invention, has a configuration similar to that of the backlight 161 described with reference to Fig. 7, except that the backlight 251 has a diffuser 261, instead of the diffuser 171.

The diffuser 261 is provided with a light incidence control layer 271 including a prismatic surface on a side of fluorescent tubes 131, in addition to a light distribution layer 181 and a diffusion layer 182 similar to those of the diffuser 171. The prismatic surface has so many V-shaped stripe grooves having a saw-tooth cross sectional shape or asperities each having a semi-cylindrical cross sectional structure arrayed in parallel with each other. The light incidence control layer 271 is formed from the same resin (the first resin 201 in Fig. 10, 11 or 13) as the light distribution layer 181 and the portion of the diffusion layer 182 excluding the diffusion elements 191, with only the diffusion elements being formed from a different resin. Therefore, neither reflection nor refraction occurs between the light incidence control layer 271 and the diffusion layer 182. Moreover, the prismatic shape of the light incidence control layer 271 may be identical with or different from that of the light distribution layer 181.

The prismatic shape of the light incidence control layer 271 is so configured as to allow light emitted from the fluorescent tubes 131 or light emitted from the fluorescent tubes 131 and then reflected by a reflection sheet 134 to be guided to the diffusion layer 182 efficiently. The proportion of light entering the light incidence control layer 271 to light reaching the light incidence control layer 271 is determined by the ratio of the refractive index of the air to that of the resin for forming the light incidence control layer 271, assuming that the light enters at a random incidence angle. By forming the prism on the light incidence control layer 271, it becomes possible to enhance the proportion, to light reaching part of the surface of the light incidence control layer 271 but being reflected by the light incidence control layer 271 without entering the light incidence control layer 271, of light re-entering other parts of the surface of the light incidence control layer 271.

Thus, the diffuser 261 in the second configuration example can reduce the ratio of light not reaching the diffusion layer 182, i.e., lost light to light emitted by the fluorescent tubes 131, as a result of the light incidence control layer 271, compared with the diffuser 171 in the first configuration example. Thus, the diffusion of light, light distribution control, and light focusing control can be.realized with a single diffuser.

By having such a configuration, the backlight 251 can realize the required light distribution performance and also suppress loss of light produced by the fluorescent tubes 131, without use of a diffusion sheet and the like, other than the diffusion layer 182.

Referring next to a flowchart of Fig. 16, and Figs. 17 and 18, a diffuser manufacturing process 3 will be described, which is an example of the process of manufacturing the diffuser 261.

In step S41, the first resin 201 for forming the light distribution layer 181, the light incidence control layer 271, and the portion of the diffusion layer 182 excluding the diffusion elements 191, and dots of the second resin 202 for forming the diffusion elements 191 are prepared.

In step S42, the dots of the second resin 202 are mixed into the first resin 201 in order to form the diffusion layer 182. From the dots of the second resin 202 mixed into the first resin 201, the diffusion elements 191 of the diffusion layer 182 are formed.

In step S43, the first resin 201 is charged into the first and third cylinders and the first resin 201 mixed with the second resin 202 is charged into the second cylinder, in order to execute multi-layer extrusion molding. That is, in the process of manufacturing the diffuser 261, three cylinders are used. As shown in Fig. 17, the first resin 201 is charged into the first cylinder, the second resin 202-mixed first resin 201 is charged into the second cylinder, and further the first resin 201 is charged into the third cylinder. The third cylinder and the first cylinder are opposed to each other across the second cylinder.

In step S44, the multi-layer extrusion molding is executed by the multi-layer extrusion molding machine. Here, since the first resin 201 is charged into the first cylinder, the second resin 202-mixed first resin 201 is charged into the second cylinder, and the first resin 201 is charged into the third cylinder, a three-layered sheet is molded, which includes a layer (of the first resin 201 with no prism molded) for producing the light distribution layer 181, the diffusion layer 182, and a layer (of the first resin 201 with no prism molded) for producing the light incidence control layer 271.

In step S45, similarly to the case described with reference to Fig 11, of the sheet produced by the multi-layer extrusion molding machine, a side of the first resin extruded from the first cylinder is molded into a prismatic shape by surface rolling using the surface roll 207, whereby the light distribution layer 181 contiguous to the diffusion layer 182 is formed.

In step S46, as shown in Fig. 18, of the sheet produced by the multi-layer extrusion molding machine, a side (in other words, a surface different from the light distribution layer 181 molded in step S45) of the first resin 201 extruded by the third cylinder is molded into a prismatic shape by surface rolling using the surface roll 207, the light incidence control layer 271 contiguous to the diffusion layer 182 is formed. The process of manufacturing the diffuser 261 having no air layer between any adjacent ones of the light distribution layer 181, diffusion layer 182, and light incidence control layer 271 is thereby terminated.

Referring next to a flowchart of Fig. 19, a diffuser manufacturing process 4 will be described, which is an example of the process of manufacturing the diffuser 261 different from the diffuser manufacturing process 3 described with reference to Fig. 16.

In step S61, the first resin 201 for forming the light distribution layer 181, the light incidence control layer 271, and the portion of the diffusion layer 182 excluding the diffusion elements 191, and dots of the second resin 202 for forming the diffusion elements 181 are prepared.

In step S62, a UV curing agent is mixed into a portion of the first resin 201 for forming the light distribution layer 181 and the light incidence control layer 271. Note that if the first resin is a UV curing resin, this step is omitted.

In step S63, the dots of the second resin 202 are mixed into the first resin 201 in order to form the diffusion layer 182. From the dots of the second resin 202 mixed into the first resin 201, the diffusion elements 191 of the diffusion layer 182 are formed.

In step S64, the second resin-mixed first resin 201 is shaped into a sheet by, e.g., the extrusion molding method, the calendar molding method, or the like. From the resin sheet thus molded, the diffusion layer 182 is formed.

In step S65, the first resin 201, into which a UV cuing agent is mixed or which is a UV curing resin, is applied to one of the surfaces of the sheet-shaped, second resin 202-mixed first resin 201.

In step S66, the first resin 201, into which a UV curing agent is mixed or which is a UV curing resin, is molded into a prismatic shape by the 2P molding method, whereby the light distribution layer 181 is formed.

In step S67, the first resin 201, into which a UV curing agent is mixed or which is a UV curing resin, is applied to a surface of the sheet-shaped, second resin 202-mixed first resin 201 (diffusion layer 182), which is different from a surface (i.e., the light distribution layer 181) on which the prism has been molded by the processing of step S66.

In step S68, the first resin 201, into which a UV curing agent is mixed or which is a UV curing resin, is molded into a prismatic shape by the 2P molding method, whereby the light incidence control layer 271 is formed. The process of manufacturing the diffuser 261 having no air layer between any adjacent ones of the light distribution layer 181, diffusion layer 182, and light incidence control layer 271 is thereby terminated.

Through the manufacturing process described with reference to Fig. 16 or 19, the diffuser 261 included in the backlight 251 of Fig. 15 is manufactured.

Alternatively, a diffuser 301 such as shown in Fig. 20 may be used, instead of the diffuser 261 of Fig. 15.

The diffuser 301 includes a light distribution layer 181 and a diffusion layer 182, similar to those in the diffuser 261, and also includes a light incidence control layer 311 having a different prismatic shape, instead of the light incidence control layer 271.

The prism of the light incidence control layer 311 which is on a side of the fluorescent tubes 131 includes a light incidence control section 321 (two light incidence control sections 321, namely, light incidence control sections 321-1 and 321-2, are shown in Fig. 20). Its shape is defined by the distance between itself and any of the fluorescent tubes 131-1 to 131-n which is closest to itself.

If the light incidence surface to which light is emitted from the fluorescent tubes 131 is flat as in the diffuser 171 of Fig. 7, or if the prism for focusing light emitted from the fluorescent tubes 131 has a consistent pattern as in the light incidence control layer 271 provided in the diffuser 261 of Fig. 15, a distribution of incidence angles of the light emitted from the fluorescent tubes 131 to the diffuser 171 or 261 varies on the flat surface of the LCD panel 122, depending on the position, whether it is immediately above any of the fluorescent tubes 131-1 to 131-n or it is between any adjacent ones of the fluorescent tubes 131-1 to 131-n. As a result, an unevenness of lightness may likely occur.

In the conventional backlight, the lightness on the flat surface of the LCD panel is designed to be uniform by dropping the lightness of portions which are light. By contrast, in the diffuser 301, it is designed such that more light can enter the diffuser 301 at positions where the lightness drops, i.e., at the positions between any adjacent ones of the fluorescent tubes 131-1 to 131-n.

That is, in the diffuser 301, by forming a prism on a surface of the light incidence control layer 311 which is on a side of the fluorescent tubes 131, the luminance of light emitted onto the LCD panel 122 can be enhanced. In addition, by optimizing the shape of the prism on the basis of the arrangement of the fluorescent tubes 131-1 to 131-n, an unevenness of altitude of the backlight can be improved.

Fig. 21 is a sectional view for explaining a third configuration example of the liquid crystal display apparatus having a backlight. .

Note that the same reference symbols are given to parts corresponding to those in the case of the first configuration example described with reference to Fig. 7, and descriptions thereof are omitted as appropriate.

That is, a backlight 351 according to the third configuration example has a configuration similar to that of the backlight 161 described with reference to Fig. 7, expect that the backlight 351 includes a diffuser 361, instead of the diffuser 171.

The diffuser 361 has a configuration similar to that of the diffuser 301 described with reference to Fig. 20, except that the diffusion layer 182 is omitted. That is, the diffuser 361 includes a light distribution layer 181 and a light incidence control section 311. Moreover, neither reflection nor refraction of light occurs between the light incidence control section 311 and the light distribution layer 181.

By omitting the diffusion layer 182 from the diffuser 361, the light transmittance of the diffuser 361 increases, compared with the diffuser 171, diffuser 261, or diffuser 301. In the case of such a configuration, uniformity of light emitted onto the LCD panel 122 by the backlight 351 is determined by combinations of light distribution performance of the light distribution layer 181 and light focusing performance of the light incidence control section 311. Thus, by optimizing the shape of the prism of each of the light distribution layer 181 and the light incidence control section 311, it becomes possible to obtain a desired performance.

By providing such a configuration, the required light distribution performance can be realized without use of a diffusion sheet and the like, other than the diffusion layer 182. Furthermore, the light transmittance is increased, and thus a high-luminance backlight can be provided, which can utilize light emitted from the fluorescent tubes 131 efficiently.

As described above, in the backlight to which the present invention is applied, a high-performance diffuser having a diffusion function and a light distribution function can be formed integrally, and thus the number of parts forming the backlight is reduced, enabling a parts cost reduction. Furthermore, in the conventional backlight, its parts are assembled such that an air layer is formed between adjacent ones of the diffuser, diffusion sheet, and lens sheet, and thus high assembling accuracy has been required, to elevate the assembly cost of the backlight. However, in the backlight to which the present invention is applied, a high-performance diffuser having a diffusion function and a light distribution function can be manufactured integrally using a simple method, and thus it becomes possible to implement an assembly cost reduction.

Note that in the foregoing backlight to which the present invention is applied, the examples in which the reflection sheet 134 is provided on the rear frame 133 have been described. However, it goes without saying that the present invention is applicable to a case where the reflection sheet 134 is disposed at other positions than that exemplified in Fig. 7 or the like, and to a case where no reflection sheet 134 is provided.

Next, the best mode for carrying out a light guide plate, and a method of manufacturing the light guide plate and a backlight, will be described in detail with reference to the drawings.

Likewise in the case mentioned above, backlights come in a type wherein light sources such as a plurality of cold cathode fluorescent lights are arrayed in parallel with each other immediately below a liquid crystal display device, and a type wherein a light source such as a cold cathode fluorescent light (CCFL) or a light emission diode (LED) is arranged along and in proximity to a side surface of a light guide plate formed from a transparent synthetic resin plate for guiding light. In the following example, a case where a light source such as a light emitting diode is disposed along and in proximity to a side surface of a light guide plate formed from a transparent synthetic resin plate for guiding light will be described.

A light guide plate 401 is shown in Fig. 22 as the best mode for carrying out the present example. The light guide plate 401 is used for, e.g., a backlight unit, which is a backlight of a liquid crystal display apparatus. Materials used for the light guide plate 401 include acrylic resins, and additionally, transparent thermoplastic resins, such as methacrylic resins, styrene resins, polycarbonate resins.

The light guide plate 401 is injection-molded using, e.g., a highly transparent acrylic resin as a material. The light guide plate 401 reflects light incident on a light incidence surface 411 at a light reflection surface 412, which is one of main surfaces of the light guide plate 401, in multiple directions, to cause the reflected light to exit from a light emergence surface 413 as uniform light. The light reflection surface 412 is provided with fine asperities, e.g., a prismatic pattern, a dot pattern, or the like, and thus the light reflection surface 412 is processed such that the light having entered the light guide plate 401 and being then guided therethrough is raised toward the light emergence surface 413 efficiently. This prismatic pattern or dot pattern on the light reflection surface 412 is formed with an injection molding die.

The light guide plate 401 is wedge-shaped such that a thickness thereof gradually decreases as viewed in a direction of guiding the light incident on the light incidence surface 411. However, the present disclosure may alternatively be applicable to light guide plates having other configurations than such a wedge-like configuration.

As a light source of the light guide plate 401, a light source section 420 is used, which has light emitting diodes (LEDs) 421a, 421b, 421c, 421d arrayed in a row at predetermined intervals on a substrate 423 shown in Fig. 22. All the light emitting diodes 421a, 421b, 421c, 421d emit light in the same direction, and their light emergence surfaces are denoted by 422a, 422b, 422c, 422d, respectively. Note that in the following description, the light emitting diodes 421a, 421b, 421c, 421d may also be collectively called the light emitting diodes 421, and their light emergence surfaces 422a, 422b, 422c, 422d may also be collectively called the light emergence surfaces 422. The light emitting diodes 421 may be, e.g., chip type light emitting diodes.

The pitch at which the light emitting diodes 421 are arrayed on the substrate 423 is determined by the size of the light guide plate 401 and the number of light emitting diodes 421 used. For example, the light emitting diodes 421 are arrayed at, e.g., 14 mm or 6 mm intervals on the substrate 423. Note that the present disclosure is not limited to the pitch for arraying the light emitting diodes 421. Thus, the present disclosure functions effectively irrespective of what pitch the light emitting diodes 421 are arrayed at on the substrate 423.

This light source section 420 is disposed with respect to the light guide plate 401 such that the light emergence surfaces 422 of the light emitting diodes 421 on the light source section 420 come in intimate contact with the light incidence surface 411 of the light guide plate 401. For example, a double-sided adhesive tape is stuck along a "x" marked region on the substrate 423 of the light source section 420 shown in Fig. 22, for adhesion to a location of the light guide plate 401 which is toward the light reflection surface 412 where reflection of light is not affected, whereby the light source section 420 can be attached to the light guide plate 401.

Moreover, the light guide plate 401 and the light source section 420 may alternatively be configured such that the light incidence surface 411 of the light guide plate 401 is brought into intimate contact with the light emergence surfaces 422 of the light emitting diodes 422, when accommodated inside a frame of the backlight unit.

In Fig. 22, positions 411a, 411b, 411c, 411d each enclosed by a dotted line on the light incidence surface 411 of the light guide plate 401 indicate the positions at which the light emergence surfaces 422 of the light emitting diodes 421 come in intimate contact with the light incidence surface 411 when the light guide plate 401 is attached to the light source section 420 as mentioned above.

A gate formation 415 remains between the positions 411b and 411c on the light incidence surface 411 of the light guide plate 401. The gate formation 415 is formed by a resin having hardened at the gate of the injection molding die, when the light guide plate 401 is injection-molded.

Since the gate formation 415 remaining on the light guide plate 401 is a sheer scrap, it is usually cut off, and ground if necessary, so as not to be left on the molded article if possible, when the injection-molded article is separated from the runner.

The gate formation 415 formed on the light incidence surface 411 of the light guide plate 401 is accommodated between the light emitting diodes 421b and 421c when the light source 420 is attached to the light guide plate 401, and thus is of no hindrance. In addition, the gate formation 415 does not exist in a direction in which the light emitting diodes 421 emit light, and thus there is no likelihood that the function of the light guide plate 401 for guiding the incident light for surface emission will be impaired whatsoever.

As described with reference to the prior art, if the gate of an injection molding die is to be positioned on the light incidence surface of a light guide plate to be molded, it has been required that the gate cutting process for cutting a gate formation formed by the gate be succeeded by the polishing process.

However, by determining the position of the gate of the injection molding die such that the gate formation 415 is formed at a position where the light emitting diodes 421 are not arranged, on the light incidence surface 411 of the light guide plate 401, only the gate cutting process for cutting the gate formation 415 may have to be performed. Furthermore, this gate cutting process may not demand accuracy such that the gate formation is cut off at a position extremely close to the light guide plate 401; but may suffice to leave the gate formation 415 on the light incidence surface 411 as a stump as thick as a light emitting diode 412 as viewed in the light emergence direction, e.g., as thick as about 1 mm.

The injection molding die used for injection-molding the light guide plate 401 includes a cavity for forming the light guide plate 401 such as shown in Fig. 22, and a gate for forming the gate formation 415. As mentioned above, the gate of the injection molding die is provided at a position of the light incidence surface 411 where the light emitting diodes 421 are not arranged, when the light source section 420 is attached to the injection-molded light guide plate 401.

Moreover, it is desirable to set the gate of the injection molding die in the middle of the light incidence surface 411 of the light guide plate 401 to be formed, such that a molten material for filling the cavity spreads out into the entire cavity uniformly.

In the example shown in Fig. 22, in which there is an even number of light emitting diodes 421 of the light source section 420, fortunately, there is an empty space in the middle of the light incidence surface 411 of the light guide plate 401 with no light emitting diodes 421 arranged. Therefore, the injection molding die is fabricated such that the gate is set between the positions 411b and 411c where the light emitting diodes 421b, 421c are to be arranged.

A case of an odd number of light emitting diodes in a light source section is shown in Fig. 23. As shown in Fig. 23, a light source section 440 has three light emitting diodes 441a, 441b, 441c arranged at predetermined intervals on a substrate 443. Positions 431a, 431b, 431c shown on a light incidence surface 431 of a wedge-shaped light guide plate 430 similar to the light guide plate 401 indicate the positions at which the light emitting diodes 441a, 441b, 441c are arranged when light emergence surfaces 442 of the light emitting diodes are attached to the light incidence surface 431 of the light guide plate 430 in intimate contact with each other.

Since the light emitting diode 441b is arranged in the middle of the light incidence surface 431, the gate cannot be placed here. Therefore, the gate of the injection molding die is to be provided at such a position as to have a gate formation 435a or 435b formed by the gate when a molten material is charged to fill the cavity, i.e., either between the positions 431b and 431a or between the positions 431b and 431c. As a result, the molten material for filling the injection molding die can spread out into the cavity substantially uniformly.

An internal surface of the cavity of the injection molding die which is to form the light reflection surface 412 of the light guide plate 401 is provided with fine asperities so as to form a prismatic pattern, a dot pattern, or the like for raising light guided through the light guide plate 401 toward the light emergence surface 413 efficiently as mentioned above. By having the shape of these asperities transferred onto the molten material charged and the molten material is then hardened, various patterns are to be formed on the light reflection surface 412.

When the light guide plate 401 is actually formed by the injection molding die, a runner portion 416 is also formed in addition to the gate formation 415, as shown in Fig. 24. The runner portion 416 is formed by a runner when the molten material, e.g., a molten acrylic resin is supplied to the injection molding die from a molten material supplying source, and is also a scrap similar to the gate formation 415. While only one light guide plate 401 with the gate formation 415 and the runner portion 416 is shown in Fig. 24, a plurality of light guide plates 401 are actually formed at the same time.

The molten material supplied from the molten material supplying source is gradually charged into the cavity of the injection molding die through the runner and the gate. When the molten material, e.g., a molten acrylic resin is charged into the cavity, control is performed to set pressure and temperature to appropriate values.

When the charging of the molten material into the cavity is terminated and the molten material in the cavity is cooled, the injection molding die is removed, and then the gate cutting process is performed at a position indicated by an arrow A shown in Fig 24, whereby the light guide plate 401 having the gate formation 415 is separated from the runner portion 416.

As mentioned above, the gate formation 415 neither is of a hindrance nor affects guiding of light at all, when the light emitting diodes 421 are attached. Thus, the light guide plate 401 having the gate formation 415 is to be used as a backlight unit of a liquid crystal display apparatus as it is.

A backlight unit 471 including the above-mentioned light guide plate 401 and light source section 420 is shown in Fig. 25. In the backlight unit 471, the light source section 420 is disposed on a side of the light incidence surface 411 of the light guide plate 401, and furthermore a reflection sheet 481 is disposed on a side of the light reflection surface 412 of the light guide plate 401, and a diffusion sheet 482, a first prism sheet 483, a second prism sheet 484 are sequentially stacked one upon another on a side of the light emergence surface 413 of the light guide plate 401. The thus disposed light guide plate 401, light source 20, reflection sheet 481, diffusion sheet 482, first prism sheet 483, second prism sheet 484 are assembled together within frames 485, 486 serving as a housing of the backlight 471, with the reflection sheet 481 being on a side of the frame 486, in a manner having no play.

It goes without saying that the diffusers according to the present invention described above may alternatively be used instead of the diffusion sheet 482, first prism sheet 483, second prism sheet 484, or in addition to these parts.

Such a backlight 471 allows light emitted from the light emitting diodes 421 of the light source section 420 to enter the light incidence surface 411 of the light guide plate 401, for guiding through the light guide plate 401, and to reflect the light at the light reflection surface 412 and the reflection sheet 481, whereby to cause the light to exit from the light emergence surface 413. The light emergent from the light emergence surface 413 is diffused as uniform light by the diffusion sheet 482. Then, by the first and second prism sheets 483, 484, horizontal and vertical components of the light are focused in a direction of the normal, i.e., in a direction perpendicular to the light incidence direction of the light from the light emitting diodes 421. The light emergent from the second prism sheet exits from an opening 485A of the frame 485, for emission onto, e.g., a liquid crystal display apparatus.

Even where the light guide plate 430 and the light source 440 shown in Fig. 23 are used, other configurations and the path of light of a backlight are exactly the same as those of the backlight unit 471, and thus description thereof are omitted.

Then, preparing a wedge-shaped light guide plate which is injection-molded using an injection molding die having a gate provided at a position of the light incidence surface where no light emitting diodes are arranged, and a wedge-shaped light guide plate which is injection-molded using an injection molding die having a gate provided on a side surface parallelling the direction of guiding light incident on the light incidence surface, their luminances were measured. Note that a molten acrylic resin is to be used as the molten material in both cases.

First, the wedge-shaped light guide plate fabricated using the injection molding die having the gate provided on the light incidence surface will be described. As shown in Fig. 26, a light guide plate 501 is so shaped that a width from a light incidence surface 551 to an anti-light incidence surface 552 is 30 mm, that a width from a side surface 553 to a side surface 554 is 35 mm, that the light incidence surface 551 has dimensions of 25 mm x 1 mm, and that the anti-light incidence surface 552 has dimensions of 35mm x 0.3 mm.

A light source section 560 for emitting light onto this light guide plate 501 includes four chip type light emitting diodes, i.e., light emitting diodes 561a, 561b, 561c, 561d, on a substrate 563. Each of the light emitting diodes has dimensions of 1 mm x 2 mm x 1 mm.

The light source section 560 is joined to a light reflection surface 557 side of the light guide plate 501 by a double-sided adhesive tape stuck along a "×" marked region on the substrate 563. At this time, light emergence surfaces 562a, 562b, 562c, 562d of the light emitting diodes are attached to the light incidence surface 551 of the light guide plate 501 so as to come in intimate contact therewith.

Between positions 551b and 551c of the light incidence surface 551 of the light guide plate 501 remains a gate formation 555 formed by the gate of the injection molding die. Since the distance between the positions 551b and 551c is about 3 mm and the thickness of the light incidence surface 551 is 1 mm, an area in which the gate formation 555 is in contact with the light incidence surface 551 is of a size smaller than these dimensions.

Moreover, the gate formation 555 is truncated to a height of 1 mm which equals the dimension of each light emitting diode as viewed in the light emergence direction, i.e., 1 mm.

A luminance measurement result of light emergent from a light emergence surface 556 is shown in Fig. 27, which was obtained when light emitted from the light source section 560 attached as mentioned above was caused to enter the light incidence surface 551 of the light guide plate 501 shown in Fig. 26. In Fig. 27, each of contours joined indicates the same luminance level, from which it is seen that substantially concentric ellipses are formed by these contours. Therefore, it is considered that the light guide plate 501 is injection-molded satisfactorily with no unevenness of transfer.

Next, the wedge-shaped light guide plate fabricated by the injection molding die with the gate provided on a side surface will be described. As shown in Fig. 28, a light guide plate 570 has exactly the same size as the light guide plate 501 shown in Fig. 26. That is, a width from a light incidence surface 571 to an anti-light incidence surface 572 is 30 mm, and a width from a side surface 573 to a side surface 574 is 35 mm. Moreover, the light incidence surface 571 has dimensions of 25 mm x 1 mm, and the anti-light incidence surface 572 has dimensions of 35 mm x 0.3 mm.

The light guide plate 570 differs from the light guide plate 501 in terms of appearance in the following two points: the light guide plate 570 has no gate formation on its light incidence surface 571, but has a gate cut mark 573A indicating that the gate has been cut from that position, on the side surface 573.

The light source section 560 described with reference to Fig. 26 is attached to this light guide plate 570 such that the light emergence surfaces 562a, 562b, 562c, 562d of the light emitting diodes come in intimate contact with the light incidence surface 571, using a double-sided adhesive tape, in exactly the same manner as in the case of the light guide plate 501.

A luminance measurement result of light reflected by a light reflection surface 575 and then emergent from the light emergence surface 556 is shown in Fig. 29, which was obtained when light emitted from the light source section 560 attached as mentioned above was caused to enter the light incidence surface 571 of the light guide plate 571 shown in Fig. 28.

As shown in Fig. 29, contours joined do not form concentric ellipses, from which it is seen that luminances are erratic in a region X which is enclosed by a solid line and shaded. The region X coincides-with the gate position. Since the molten resin is charged under an extremely high pressure at this position, the degree of transfer is not uniform between left and right sides with respect to the light incidence direction. That is, it is considered that an unevenness of transfer has occurred, causing also luminance variations.

As is seen from the above results, the light guide plate 501 injection-molded by the injection molding die having the gate between the positions 551b and 551c of the light incidence surface 551 is free from an unevenness of transfer and thus exhibits superior luminance characteristics, even with the gate formation 555 left on the light incidence surface 551.

## Claims

1. A backlight (251) provided for a liquid crystal display device (122) for illuminating thereof, comprising a light source (131) for emitting light and a diffuser (261,302) disposed at the side of the light source (131) to be facing toward the liquid crystal display device (122), wherein said diffuser (261,301) includes a diffusion layer (182) for diffusing the light emitted from the light source, and a light distribution layer (181) integrally formed with the diffusion layer (182) and adapted to be disposed more toward the liquid crystal display device (122) than the diffusion layer (182), for distributing the light diffused by the diffusion layer (182) toward the liquid crystal display device (122), wherein
said diffusion layer (182) includes a plurality of diffusion elements (191), and that
a first resin (201) forming the light distribution layer (181), and the portion of the diffusion layer (182) excluding said diffusion element (191) is different from a second resin (202) forming said diffusion elements (191), **characterized in that**
said diffuser (261,301) further comprises a light focusing layer (271,311) for focusing the light emitted from the light source (131), formed integrally with the diffusion layer (182), and disposed more toward the light source (131) than the diffusion layer (182), wherein said focusing layer (271,311) is formed of said first resin (201).

2. The backlight (251) as described in claim 1, **characterized in that** said light distribution layer (181) has a prismatic surface on a surface thereof facing toward the liquid crystal display device (122).

3. The backlight (254) as described in claim 1, **characterized in that** said first resin (201) and said second resin (202) are resin materials having refractive indexes ranging from 1.2 to 1.7.

4. The backlight (254) as described in claim 1, **characterized in that**
said focusing layer (271,311) has a prismatic shape on a surface thereof facing to said light source (131).

5. A method for manufacturing a diffuser (261,301) of a backlight (251) provided for a liquid crystal display device (122) for illuminating thereof, said method **characterized by** comprising:
a first charging step of charging a first resin (201) into a first cylinder (205);
a second charging step of charging the first resin (201) into which a second resin (202) different from the first resin (201) is mixed, into a second cylinder (206);
a third charging step of charging the first resin (201) into a third cylinder (281);
a first molding step of molding a three-layered sheet by multi-layer extrusion molding, using the first cylinder (205) into which the first resin (201) is charged by the first charging step, the second cylinder (206) into which the first resin (201) into which the second resin (202) is mixed is charged by the second charging step, and the third cylinder (281) into which the first resin (201) is charged by the third charging step, wherein the three-layered sheet is formed from the first resin (201), the first resin (201) into which the second resin (202) is mixed, and the first resin (201), with both exposed layers thereof being formed from the first resin (201);
a second molding step of molding a surface of one of the exposed layers of the sheet molded by the first molding step into a prismatic shape by surface rolling; and
a third molding step of molding a surface of the other one of the exposed layers of the sheet molded by the first molding step into a prismatic shape by surface rolling.

6. The method according to claim 5 **characterized in that** for the second molding step, a 2P molding method in contact and integral with the one of the surfaces of the sheet molded by the first molding step is used.

7. The method according to claim 6, **characterized in that** for the third molding step , a 2P molding method in contact and integral with the other one of the surfaces of the sheet molded by the first molding step is used.

8. A liquid crystal display apparatus **characterized by** comprising:
a liquid crystal display device (122); and
a backlight (251) according to any of claims 1 to 4 for illuminating the liquid crystal display device (122) .

## Patentansprüche

1. Hintergrundbeleuchtung (251), die für eine Flüssigkristallanzeigevorrichtung (122) für deren Beleuchtung vorgesehen ist, mit einer Lichtquelle (131) zum Aussenden von Licht und einem Diffusor (261, 301), der auf einer Seite der Lichtquelle (131) angeordnet ist, so dass er der Flüssigkristallanzeigevorrichtung (122) zugewandt ist, wobei der Diffusor (261, 301) eine Diffusionsschicht (182) zum Streuen des von der Lichtquelle ausgesendeten Lichts und eine Lichtverteilungsschicht (181), die mit der Diffusionsschicht (182) einteilig ausgebildet ist und dazu ausgelegt ist, näher bei der Flüssigkristallanzeigevorrichtung (122) als bei der Diffusionsschicht (182) angeordnet zu sein, um das durch die Diffusionsschicht (182) gestreute Licht zu der Flüssigkristallanzeigevorrichtung (122) zu verteilen, enthält, wobei
die Diffusionsschicht (182) mehrere Diffusionselemente (191) aufweist und ein erstes Harz (201) die Lichtverteilungsschicht (181) bildet und der Abschnitt der Diffusionsschicht (182) mit Ausnahme des Diffusionselements (191) von einem zweiten Harz (202), das die Diffusionselemente (191) bildet, verschieden ist, **dadurch gekennzeichnet, dass**
der Diffusor (261, 301) ferner eine Lichtfokussierungsschicht (271, 311) aufweist, um das von der Lichtquelle (131) ausgesendete Licht zu fokussieren, die einteilig mit der Diffusionsschicht (182) ausgebildet ist und näher bei der Lichtquelle (131) als die Diffusionsschicht (182) angeordnet ist, wobei die Fokussierungsschicht (271, 311) aus dem ersten Harz (201) gebildet ist.

2. Hintergrundbeleuchtung (251) nach Anspruch 1, **dadurch gekennzeichnet, dass** die Lichtverteilungsschicht (181) auf einer ihrer Oberflächen, die der Flüssigkristallanzeigevorrichtung (122) zugewandt ist, eine prismatische Oberfläche besitzt.

3. Hintergrundbeleuchtung (251) nach Anspruch 1, **dadurch gekennzeichnet, dass** das erste Harz (201) und das zweite Harz (202) Harzmaterialien mit Brechungsindizes im Bereich von 1,2 bis 1,7 sind.

4. Hintergrundbeleuchtung (251) nach Anspruch 1, **dadurch gekennzeichnet, dass**
die Fokussierungsschicht (271, 311) auf einer ihrer Oberflächen, die der Lichtquelle (131) zugewandt ist, eine prismatische Form besitzt.

5. Verfahren zum Herstellen eines Diffusors (261, 301) einer Hintergrundbeleuchtung (251), die für eine Flüssigkristallanzeigevorrichtung (122) für deren Beleuchtung vorgesehen ist, wobei das Verfahren **gekennzeichnet ist durch**:
einen ersten Ladeschritt zum Laden eines ersten Harzes (201) in einen ersten Zylinder (205);
einen zweiten Ladeschritt zum Laden des ersten Harzes (201), in das ein von dem ersten Harz (201) verschiedenes zweites Harz (202) gemischt ist, in einen zweiten Zylinder (206);
einen dritten Ladeschritt zum Laden des ersten Harzes (201) in einen dritten Zylinder (281);
einen ersten Gießschritt zum Gießen einer dreischichtigen Lage **durch** Mehrlagen-Extrusionsgießen unter Verwendung des ersten Zylinders (205), in den das erste Harz (201) **durch** den ersten Ladeschritt geladen ist, des zweiten Zylinders (206), in den das erste Harz (201), in das das zweite Harz (202) gemischt ist, **durch** den zweiten Ladeschritt geladen ist, und des dritten Zylinders (281), in den das erste Harz (201) **durch** den dritten Ladeschritt geladen ist, wobei die dreischichtige Lage aus dem ersten Harz (201), dem ersten Harz (201), in das das zweite Harz (202) gemischt ist, und dem ersten Harz (201) gebildet ist, wobei beide freiliegenden Schichten hiervon aus dem ersten Harz (201) gebildet sind;
einen zweiten Gießschritt zum Gießen einer Oberfläche einer der freiliegenden Schichten der Lage, die **durch** den ersten Gießschritt gegossen ist, in eine prismatische Form **durch** Oberflächenwalzen; und
einen dritten Gießschritt zum Gießen einer Oberfläche der Anderen der freiliegenden Schichten der Lage, die **durch** den ersten Gießschritt gegossen ist, in eine prismatische Form **durch** Oberflächenwalzen.

6. Verfahren nach Anspruch 5, **dadurch gekennzeichnet, dass** für den zweiten Gießschritt ein 2P-Gießverfahren in Kontakt mit der einen der durch den ersten Gießschritt gegossen Oberflächen der Lage und einteilig hiermit verwendet wird.

7. Verfahren nach Anspruch 6, **dadurch gekennzeichnet, dass** das für den dritten Gießschritt ein 2P-Gießverfahren in Kontakt mit der anderen der durch den ersten Gießschritt gegossenen Oberflächen der Lage und einteilig hiermit verwendet wird.

8. Flüssigkristallanzeigevorrichtung, **gekennzeichnet durch**:
eine Flüssigkristallanzeigevorrichtung (122); und
eine Hintergrundbeleuchtung (251) nach einem der Ansprüche 1 bis 4 zum Beleuchten der Flüssigkristallanzeigevorrichtung (122).

## Revendications

1. Rétroéclairage (251) prévu pour un dispositif d'affichage à cristaux liquides (122) pour l'éclairage de celui-ci, comprenant une source de lumière (131) pour émettre une lumière et un diffuseur (261, 301) disposé à côté de la source de lumière (131) de manière à être orienté vers le dispositif d'affichage à cristaux liquides (122), dans lequel ledit diffuseur (261, 301) comprend une couche de diffusion (182) pour diffuser la lumière émise par la source de lumière, et une couche de distribution de lumière (181) formée d'un seul tenant avec la couche de diffusion (182) et conçue pour être disposée davantage vers le dispositif d'affichage à cristaux liquides (122) que la couche de diffusion (182), pour distribuer la lumière diffusée par la couche de diffusion (182) vers le dispositif d'affichage à cristaux liquides (122), dans lequel
ladite couche de diffusion (182) comprend une pluralité d'éléments de diffusion (191), et
une première résine (201) formant la couche de distribution de lumière (181), et la partie de la couche de diffusion (182) à l'exclusion dudit élément de diffusion (191) est différente d'une deuxième résine (202) formant lesdits éléments de diffusion (191), **caractérisé en ce que**
ledit diffuseur (261, 301) comprend en outre une couche de focalisation de lumière (271, 311) pour focaliser la lumière émise par la source de lumière (131), formée d'un seul tenant avec la couche de diffusion (182), et disposée davantage vers la source de lumière (131) que la couche de diffusion (182), dans lequel ladite couche de focalisation (271, 311) est constituée de ladite première résine (201).

2. Rétroéclairage (251) selon la revendication 1, **caractérisé en ce que** ladite couche de distribution de lumière (181) a une surface prismatique sur une surface de celle-ci orientée vers le dispositif d'affichage à cristaux liquides (122).

3. Rétroéclairage (251) selon la revendication 1, **caractérisé en ce que** ladite première résine (201) et ladite deuxième résine (202) sont des matériaux résineux ayant des indices de réfraction allant de 1,2 à 1,7.

4. Rétroéclairage (251) selon la revendication 1, **caractérisé en ce que**
ladite couche de focalisation (271, 311) a une forme prismatique sur une surface de celle-ci orientée vers ladite source de lumière (131).

5. Procédé de fabrication d'un diffuseur (261, 301) d'un rétroéclairage (251) prévu pour un dispositif d'affichage à cristaux liquides (122) pour l'éclairage de celui-ci, ledit procédé étant **caractérisé en ce qu'**il comprend:
une première étape de chargement consistant à charger une première résine (201) dans un premier cylindre (205) ;
une deuxième étape de chargement consistant à charger la première résine (201) dans laquelle une deuxième résine (202) différente de la première résine (201) est mélangée, dans un deuxième cylindre (206) ;
une troisième étape de chargement consistant à charger la première résine (201) dans un troisième cylindre (281) ;
une première étape de moulage consistant à mouler une feuille à trois couches par un moulage par extrusion multicouche, en utilisant le premier cylindre (205) dans lequel la première résine (201) est chargée par la première étape de chargement, le deuxième cylindre (206) dans lequel la première résine (201) dans laquelle la deuxième résine (202) est mélangée est chargée par la deuxième étape de chargement, et le troisième cylindre (281) dans lequel la première résine (201) est chargée par la troisième étape de chargement, dans lequel la feuille à trois couches est formée à partir de la première résine (201), de la première résine (201) dans laquelle la deuxième résine (202) est mélangée, et de la première résine (201), les deux couches exposées de celle-ci étant formées à partir de la première résine (201) ;
une deuxième étape de moulage consistant à mouler une surface de l'une des couches exposées de la feuille moulée par la première étape de moulage en une forme prismatique par laminage superficiel ; et
une troisième étape de moulage consistant à mouler une surface de l'autre des couches exposées de la feuille moulée par la première étape de moulage en une forme prismatique par laminage superficiel.

6. Procédé selon la revendication 5, **caractérisé en ce que**, pour la deuxième étape de moulage, un procédé de moulage 2P en contact et d'un seul tenant avec l'une des surfaces de la feuille moulée par la première étape de moulage est utilisé.

7. Procédé selon la revendication 6, **caractérisé en ce que**, pour la troisième étape de moulage, un procédé de moulage 2P en contact et d'un seul tenant avec l'autre des surfaces de la feuille moulée par la première étape de moulage est utilisé.

8. Appareil d'affichage à cristaux liquides, **caractérisé en ce qu'**il comprend :
un dispositif d'affichage à cristaux liquides (122) ; et
un rétroéclairage (251) selon l'une quelconque des revendications 1 à 4 pour éclairer le dispositif d'affichage à cristaux liquides (122).
